(19) 

(11) **EP 4 485 576 B1**

(12) **EUROPEAN PATENT SPECIFICATION**

(45) Date of publication and mention of the grant of the patent:
**02.09.2026 Bulletin 2026/36**

(21) Application number: **22934332.2**

(22) Date of filing: **01.04.2022**

(51) International Patent Classification (IPC):
***H01M 4/58*** *(2010.01)* ***H01M 4/62*** *(2006.01)*
***H01M 4/136*** *(2010.01)* ***H01M 4/36*** *(2006.01)*
***H01M 10/0525*** *(2010.01)* ***H01M 10/0567*** *(2010.01)*
*C01B 25/45 (2006.01)* *H01M 4/02 (2006.01)*

(52) Cooperative Patent Classification (CPC):
**H01M 4/366; H01M 4/136; H01M 4/58; H01M 4/5825; H01M 4/625; H01M 10/0525; H01M 10/0567;** C01B 25/45; H01M 2004/021; H01M 2004/028; H01M 2300/0025; Y02E 60/10

(86) International application number:
**PCT/CN2022/084865**

(87) International publication number:
**WO 2023/184498 (05.10.2023 Gazette 2023/40)**

(54) **SECONDARY BATTERY, BATTERY MODULE, BATTERY PACK, AND ELECTRIC APPARATUS**

SEKUNDÄRBATTERIE, BATTERIEMODUL, BATTERIEPACK UND ELEKTRISCHE VORRICHTUNG

BATTERIE SECONDAIRE, MODULE DE BATTERIE, BLOC-BATTERIE ET APPAREIL ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.01.2025 Bulletin 2025/01**

(73) Proprietor: **Contemporary Amperex Technology Co., Limited**
**Ningde, Fujian 352100 (CN)**

(72) Inventors:
- **ZHANG, Limei**
  **Ningde, Fujian 352100 (CN)**
- **CHEN, Peipei**
  **Ningde, Fujian 352100 (CN)**
- **JIANG, Yao**
  **Ningde, Fujian 352100 (CN)**
- **LIU, Jiao**
  **Ningde, Fujian 352100 (CN)**

(74) Representative: **Kraus & Lederer PartGmbB**
**Thomas-Wimmer-Ring 15**
**80539 München (DE)**

(56) References cited:
**WO-A1-2018/032569**
**CN-A- 103 069 624**
**CN-A- 103 872 320**
**CN-A- 106 058 225**
**CN-A- 106 099 171**
**CN-A- 106 816 600**
**CN-A- 109 301 174**
**CN-A- 111 029 653**
**CN-A- 111 668 547**
**CN-A- 112 234 252**
**JP-A- 2014 056 722**
**US-A1- 2016 190 584**
**US-A1- 2019 355 983**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

This application relates to the field of lithium battery technologies, and in particular, to a secondary battery, a battery module, a battery pack, and an electric apparatus.

### BACKGROUND

In recent years, with increasingly wide use of lithium-ion batteries, lithium-ion batteries have been widely used in energy storage power supply systems such as hydroelectric, thermal, wind, and solar power plants, and many other fields including electric tools, electric bicycles, electric motorcycles, electric vehicles, military equipment, and aerospace. Along with the great development of lithium-ion batteries, higher requirements are imposed on their energy density, cycling performance, safety performance, and the like.

Compared with other positive electrode active materials, lithium manganese phosphate positive electrode active materials have higher safety and better cycle life. However, lithium manganese phosphate has a disadvantage of poor rate performance. Currently, this problem is typically addressed through methods such as coating or doping. It would be still desired to further improve the rate performance, cycling performance, high-temperature stability, and the like of lithium manganese phosphate positive electrode active materials.

Among the prior art, secondary batteries including positive electrode materials of related types have been disclosed, for instance, in US 2016/190584 A1, CN 103 872 320 A, CN 109 301 174 A, US 2019/355983 A1 and WO 2018/032569 A1.

### SUMMARY

This application has been made in view of the foregoing issues. An objective of this application is to provide a secondary battery, a battery module, a battery pack, and an electric apparatus so as to solve the problem of poor rate performance and cycling performance of lithium manganese phosphate secondary batteries.

To achieve the foregoing objective, a first aspect of this application provides a secondary battery according to claim 1.

The non-aqueous electrolyte includes a first additive as defined in claim 1. According to the present disclosure, the first additive includes one or more from a group consisting of compounds shown in formula 1 and compounds shown in formula 2,

O, O, O, $R_1$, $R_2$ formula 1

O, O, O, $R_3$, $R_6$, $R_4$, $R_5$ formula 2

where $R_1$ and $R_2$ each independently represent any one of a hydrogen atom, a halogen atom, a C1-C6 alkyl group, a C1-C6 haloalkyl group, a C1-C6 alkoxy group, a C2-C6 alkenyl group, or a C2-C6 alkynyl group; and

$R_3$, $R_4$, $R_5$, and $R_6$ each independently represent any one of a hydrogen atom, a halogen atom, a C1-C6 alkyl group, a C1-C6 haloalkyl group, a C1-C6 alkoxy group, a C2-C6 alkenyl group, a C2-C6 alkynyl group, or a C2-C6 alkynyloxy group; and $R_3$, $R_4$, $R_5$, and $R_6$ do not all represent a hydrogen atom.

Unless otherwise specified, in the foregoing chemical formula, when A is two or more elements, the foregoing limitation on the value range of y is not only a limitation on the stoichiometric number of each element as A but also a limitation on the sum of the stoichiometric numbers of all elements as A. For example, when A is two or more elements A1,

A2, ..., An, the stoichiometric numbers y1, y2, ..., yn of all of A1, A2, ..., An must fall within the value range defined by this application for y, and the sum of y1, y2, ..., yn must also fall within the value range. Similarly, in a case that R is two or more elements, the limitation on the value range of the stoichiometric number of R in this application also has the foregoing meaning.

The lithium manganese phosphate positive electrode active material in this application is a core-shell structure with two coating layers, where the core includes $Li_{1+x}Mn_{1-y}A_yP_{1-z}R_zO_4$. Element A doping at the manganese site of lithium manganese phosphate in the core helps to decrease the lattice change rate of lithium manganese phosphate during lithium deintercalation and intercalation, improve the structural stability of the lithium manganese phosphate positive electrode material, and greatly reduce the dissolution of manganese and reduce particle surface oxygen activity. Element R doping at the phosphorus site helps to change difficulty in varying the Mn-O bond length, thereby reducing the migration barrier of lithium ions, promoting the migration of lithium ions, and improving the rate performance of the secondary battery.

The first coating layer of the positive electrode active material in this application includes a pyrophosphate and a phosphate. The high migration barrier (> 1 eV) of transition metals in the pyrophosphate can effectively inhibit the dissolution of transition metals. The crystalline phosphate has excellent ability to conduct lithium ions, and may decrease the amount of impurity lithium on the surface. In addition, as a carbon-containing layer, the second coating layer can effectively improve the electrical conductivity and desolvation ability of $LiMnPO_4$. Moreover, the "barrier" function of the second coating layer can further hinder the migration of manganese ions into the electrolyte and reduce the corrosion of the active material by the electrolyte.

Therefore, with specific element doping and surface coating on lithium manganese phosphate in this application, it is possible to effectively inhibit the dissolution of manganese ions during lithium deintercalation and intercalation, and promote the migration of lithium ions, thereby improving the rate performance of the cell and improving the cycling performance and high-temperature performance of the secondary battery.

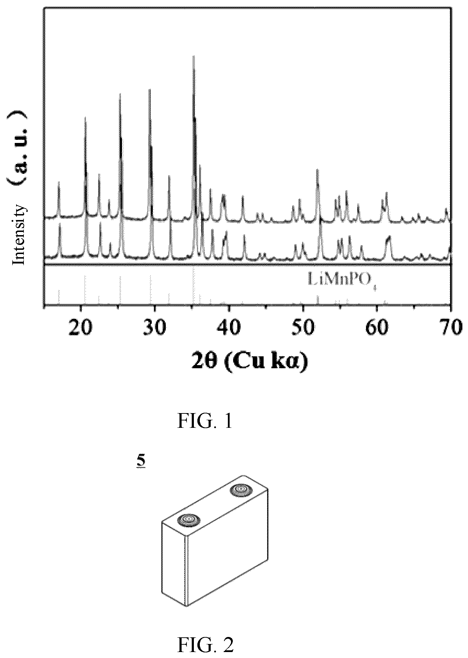

It should be noted that, as shown in FIG. 1, in this application, it can be seen by comparing the XRD spectrum patterns of $LiMnPO_4$ with and without doping that positions of main characteristic peaks of the positive electrode active material in this application are basically consistent with those of $LiMnPO_4$ without doping, indicating that the doped lithium manganese phosphate positive electrode active material has no impurity phase, and the improvement of the secondary battery performance mainly comes from the element doping, rather than due to impurity phases.

Moreover, a first additive is introduced into the non-aqueous electrolyte to form a polymer layer on the surface of the coating layer during charging of the lithium-ion battery. This prevents the dissolution of the coating layers, reduces the dissolution of manganese ions, lowers the catalytic activity of the coated carbon, and reduces active lithium consumption, thereby further improving the high-temperature cycling and storage performance of the secondary battery.

The compound of the foregoing formula 1 is selected from common formula 1 compounds in the prior art. In some embodiments, $R_1$ and $R_2$ each independently represent any one of a hydrogen atom, a halogen atom, a C1-C4 alkyl group, a C1-C4 haloalkyl group, a C1-C4 alkoxy group, a C2-C4 alkenyl group, or a C2-C4 alkynyl group, and optionally, $R_1$ and $R_2$ each independently represent any one of a hydrogen atom, a halogen atom, a C1-C4 alkyl group, a C1-C2 haloalkyl group, or a C2-C3 alkenyl group.

The compound of the foregoing formula 2 is selected from common formula 2 compounds in the prior art. In some embodiments, $R_3$, $R_4$, $R_5$, and $R_6$ each independently represent any one of a hydrogen atom, a halogen atom, a C1-C4 alkyl group, a C1-C4 haloalkyl group, a C1-C4 alkoxy group, a C2-C4 alkenyl group, a C2-C4 alkynyl group, or a C2-C4 alkynyloxy group, optionally, $R_3$, $R_4$, $R_5$, and $R_6$ each independently represent any one of a hydrogen atom, a halogen atom, a C1-C3 alkyl group, a C1-C2 haloalkyl group, a C1-C4 alkoxy group, a C2-C4 alkenyl group, or a C2-C4 alkynyloxy group, and $R_3$, $R_4$, $R_5$, and $R_6$ do not all represent a hydrogen atom.

Further, in the present disclosure, the first additive includes at least one of the following compounds:

An excessive amount of the first additive will increase the impedance of the positive electrode, resulting in abnormal capacity and deteriorated rate performance of the secondary battery. In addition, an excessive amount of the first additive can cause oxidation and gas generation during the lithium-ion charging process, deteriorating the high-temperature cycling and storage performance of the secondary battery. In some embodiments, based on a total weight of the non-aqueous electrolyte, a percentage of the first additive is W1% by weight, W1 being 0.01 to 20, optionally 0.2 to 8 or 0.5 to 5. The mass percentage of the first additive in the electrolyte within the foregoing range can prevent the coating layers of pyrophosphate and phosphate from being dissolved, lower the catalytic activity of the coated carbon, and also avoid an increase in the impedance of the positive electrode, thereby further improving the high-temperature cycling and storage performance of the secondary battery without impairing the capacity and rate performance of the lithium-ion battery.

According to the invention, the first additive is any one of the following compounds:

The polymers formed by the first additives above are more stable during the charging process, thus improving the dissolution of Mn in the positive electrode active material of this application more efficiently.

The first additive is used to form a polymer layer on the positive electrode, to prevent the dissolution of the coating layers, reduce the dissolution of manganese ions, lower the catalytic activity of the coated carbon, and reduce active lithium consumption. However, the first additive also increases the impedance of the positive electrode and deteriorates the capacity and rate performance of the secondary battery. To address the negative effects caused by the first additive, in some embodiments, the non-aqueous electrolyte also includes a second additive. The second additive includes one or more of cyclic sulfates. Each of the foregoing second additives can be used to generate a film on the positive electrode to form a low-resistance CEI film, further improving the capacity and rate performance of the secondary battery.

In some embodiments, the foregoing cyclic sulfates include at least one of the compounds shown in formula 3,

formula 3

where q represents 1, 2, or 3; $R_{14}$ represents one of a hydrogen atom, a halogen atom, a carbonyl group, a C1-C6 alkyl group, a C1-C3 haloalkyl group, a C1-C3 alkoxy group, a C1-C3 haloalkoxy group, and a cyclic sulfate group, and optionally $R_{14}$ represents one of a hydrogen atom, a halogen atom, a C1-C4 alkyl group, and a cyclic sulfate group; $R_{15}$ each independently represents one of a hydrogen atom, a halogen atom, a C1-C6 alkyl group, a C1-C3 haloalkyl group, a C1-C3 alkoxy group, a C1-C3 haloalkoxy group, a C1-C6 aryl group, and a cyclic sulfate group, and optionally, $R_{15}$ each independently represents one of a hydrogen atom, a halogen atom, a C1-C4 alkyl group, and a cyclic sulfate group; and optionally, $R_{11}$ and $R_{12}$ are connected and form a C3-C6 cycloalkyl group with C connected therewith.

Optionally, the cyclic sulfates include at least one of the following compounds:

Further optionally, the second additive includes at least one of the following compounds:

In some embodiments, based on the total weight of the non-aqueous electrolyte, a percentage of the second additive is W2% by weight, W2 being 0.01 to 20 (such as 0.01, 0.05, 0.1, 0.2, 0.3, 0.4, 0.5, 1, 2, 3, 4, 5, 8, 10, 12, 15, 18, or 20), optionally 0.1 to 10 or 0.3 to 7, so as to form a low-impedance CEI film with an appropriate thickness.

In some embodiments, based on the total weight of the non-aqueous electrolyte, a percentage of the first additive is W1% by weight, W1 being 0.01 to 20 (such as 0.01, 0.05, 0.1, 0.2, 0.3, 0.4, 0.5, 1, 2, 3, 4, 5, 8, 10, 12, 15, 18, or 20), optionally 0.1 to 10 or 0.7 to 7, and optionally A is the mass ratio of W2/W1, A being 0.1 to 10 (such as 0.1, 0.5, 1, 2, 3, 4, 5, 6, 7, 8, 9, or 10), optionally 0.2 to 5. In a case that the amounts of the first additive and the second additive satisfy the foregoing conditions, the second additive can be used to effectively alleviate the problem of the increase in the impedance of positive electrode caused by the first additive, and further optimize the improvement effect of the first additive on battery capacity and rate performance.

In some embodiments, the non-aqueous electrolyte further includes a third additive. The third additive includes one or more selected from a group consisting of a chain sulfate compound, a sulfite compound, a sultone compound containing an unsaturated bond, a disulfonic acid compound, a nitrile compound, an aromatic compound, an isocyanate compound, a phosphazene compound, a cyclic anhydride compound, a phosphite compound, a phosphate compound,

and a borate compound. The third additive can improve the capacity and cycling performance of the secondary battery according to its own performance, and those skilled in the art can select a corresponding third additive according to actual needs.

In some embodiments, the non-aqueous electrolyte further includes an organic solvent. The organic solvent is not particularly limited in type and may be selected according to actual needs. Optionally, the organic solvent includes one or more selected from a group consisting of dimethyl carbonate, diethyl carbonate, dipropyl carbonate, ethyl methyl carbonate, methyl propyl carbonate, ethylene propyl carbonate, ethylene carbonate, propylene carbonate, butylene carbonate, gamma-butyrolactone, methyl formate, ethyl formate, methyl acetate, ethyl acetate, propyl acetate, methyl propionate, ethyl propionate, butyl propionate, and tetrahydrofuran.

In some embodiments, the non-aqueous electrolyte further includes an electrolytic salt. Optionally, the electrolytic salt includes one or more from a group consisting of $LiN(C_xF_{2x+1}SO_2)(C_yF_{2y+1}SO_2)$, $Li(FSO_2)_{2N}$, $LiCF_3SO_3$, $LiPF_6$, $LiBF_4$, $LiAsF_6$, $LiClO_4$, LiBOB, LiDFOB, and LiTFOP, x and y represent positive integers, optionally, x and y are each independently 0, 1, 2, or 3, and a concentration of the electrolytic salt in the non-aqueous electrolyte is in the range of 0.5 M-2 M, optionally 0.8 M-1.5 M, which can ensure the smooth and rapid migration of $Li^+$ in the positive and negative electrodes.

In some embodiments, based on a weight of the core, a coating amount of the first coating layer is C1% by weight, C1 being greater than 0 and less than or equal to 7, optionally 4-5.6. With the coating amount of the first coating layer within the foregoing range, the dissolution of manganese ions can be further inhibited and lithium ion transport can be further promoted. In addition, the following situations can be effectively avoided: A too-small coating amount of the first coating layer may lead to insufficient inhibition of the dissolution of manganese ions by pyrophosphate, and the improvement in lithium ion transport performance may not be significant; and a too-large coating amount of the first coating layer may lead to an excessively thick coating layer, increasing the battery impedance and affecting the kinetic performance of the battery.

In some embodiments, based on a weight of the core, a coating amount of the second coating layer is C2% by weight, C2 being greater than 0 and less than or equal to 6, optionally 3-5. The carbon-containing layer as the second coating layer can play a "barrier" function to avoid direct contact between the positive electrode active material and the electrolyte, thereby reducing the corrosion of the active material by the electrolyte and improving the safety performance of the battery at high temperatures. In addition, the carbon-containing layer has high electrical conductivity and therefore can reduce the internal resistance of the battery, thereby improving the kinetic performance of the battery. However, due to the relatively low gram capacity of carbon materials, a too-large applied amount of the second coating layer may result in a reduction of the overall gram capacity of the positive electrode active material. Therefore, with the coating amount of the second coating layer within the foregoing range, the kinetic performance and safety performance of the secondary battery can be further improved without sacrificing the gram capacity of the positive electrode active material.

In some embodiments, C is defined as a relationship W1/(C1+C2) between the percentage W1 of the first additive, the coating amount C1 of the first coating layer, and the coating amount C2 of the second coating layer, C being in the range of 0.001 to 2 (such as 0.001, 0.005, 0.01, 0.05, 0.1, 0.2, 0.3, 0.4, 0.5, 0.6, 0.7, 0.8, 0.9, 1, 1.5, or 2), optionally 0.01 to 1. With the C value controlled within the foregoing range, it is possible to avoid that in a case that the C value is below the foregoing range, no sufficient amount of the first additive is guaranteed to act on the coating layer, effects of inhibiting the dissolution of manganese ions and reducing the decomposition of electrolyte due to catalysis and oxidation caused by the coated carbon are insignificant, and then high-temperature cycling and storage performance cannot be significantly improved. However, in a case that the C value exceeds beyond the foregoing range, an excessive amount of the additive acting on the coating layer makes the impedance of the positive electrode excessively high, impairing the improvement of the gram capacity and rate performance of the lithium-ion battery.

In the positive electrode active material of the secondary battery according to the invention, a weight ratio of the pyrophosphate to the phosphate in the first coating layer is in the range of 1:3 to 3:1, optionally 1:3 to 1:1. An appropriate ratio of the pyrophosphate to the phosphate is conducive to fully utilizing the synergistic effect of the two, and the following situation can be avoided: An excessive amount of pyrophosphate and an insufficient amount of phosphate may lead to an increase in battery impedance; and an excessive amount of phosphate and an insufficient amount of pyrophosphate makes the effect of inhibiting the dissolution of manganese ions insignificant.

In any embodiment, the phosphate in the first coating layer has an interplanar spacing of 0.345-0.358 nm and an included angle of 24.25°-26.45° in the [111] crystal orientation; and the pyrophosphate in the first coating layer has an interplanar spacing of 0.293-0.326 nm and an included angle of 26.41°-32.57° in the [111] crystal orientation. With the interplanar spacing and the included angle of the (111) crystal orientation of the phosphate and pyrophosphate in the first coating layer within the foregoing range, the impurity phase in the coating layer can be more effectively avoided, thereby further increasing the gram capacity of the material and further improving the cycling performance and rate performance of the secondary battery.

In any embodiment, y is any value selected in the range of 0.1-0.4. The y value selected in this range can further improve the gram capacity and rate performance of a first positive electrode active material.

In any embodiment, M and X are each independently one or more elements selected from Li and FE.

In any embodiment, a ratio of y to 1-y is selected from 1:10 to 10:1, optionally 1:4 to 1:1. Herein, y represents the sum of the stoichiometric numbers of doping elements at the Mn site. The energy density and cycling performance of the secondary battery prepared by using the positive electrode plate can be further improved when the foregoing conditions are satisfied.

In any embodiment, a ratio of z to 1-z is selected from 1:999 to 1:9, optionally 1:499 to 1:249. Herein, z represents the sum of the stoichiometric numbers of doping elements at the P site. The energy density and cycling performance of the secondary battery prepared by using the positive electrode plate can be further improved when the foregoing conditions are satisfied.

In any embodiment, the crystallinity of the pyrophosphate and phosphate in the first positive electrode active material each independently ranges from 10% to 100%, optionally from 50% to 100%. In the first coating layer of the lithium manganese phosphate positive electrode active material in those embodiments, the pyrophosphate and phosphate with specific crystallinity is conducive to maintaining the structural stability of the first coating layer and reducing lattice defects. This is conducive to fully utilizing the effect of the pyrophosphate on hindering the dissolution of manganese ions and also conducive for the phosphate to reducing the amount of impurity lithium contained on the surface and decreasing the valence state of surface oxygen, thereby reducing interface side reactions between the positive electrode material and the electrolyte, reducing the consumption of the electrolyte, and improving the cycling performance and safety performance of the secondary battery.

In any embodiment, A is at least two elements selected from Fe, Ti, V, Ni, Co, and Mg. Selection of the doping elements from the foregoing range is conducive to enhancing the doping effect to further reduce the lattice change rate, thereby inhibiting the dissolution of manganese and reducing the consumption of the electrolyte and active lithium, and is also conducive to further reducing the surface oxygen activity and reducing interface side reactions between the positive electrode active material and the electrolyte, thereby improving the cycling performance and high-temperature storage performance of the battery.

In any embodiment, a Li/Mn antisite defect concentration of the first positive electrode active material is lower than 4%, optionally lower than 2%. In the positive electrode active material in this application, the Li/Mn antisite defect refers to the interchange of the sites of $Li^+$ and $Mn^{2+}$ in $LiMnPO_4$ lattice. Because the $Li^+$ transport channel is a one-dimensional channel and $Mn^{2+}$ has difficulty in migrating in the $Li^+$ transport channel, $Mn^{2+}$ of the antisite defect hinders the $Li^+$ transport. With Li/Mn antisite defect concentration controlled at a low level, the gram capacity and rate performance of $LiMnPO_4$ can be improved.

In any embodiment, a lattice change rate of the positive electrode active material is lower than 6%, optionally lower than 4%. The processes of lithium deintercalation and intercalation of $LiMnPO_4$ are two-phase reactions. The interface stress between two phases is determined by the magnitude of the lattice change rate, and a smaller lattice change rate indicates a lower interface stress, making $Li^+$ transport easier. Therefore, a decrease in the lattice change rate of the core will be conducive to enhancing $Li^+$ transport capacity, thereby improving the rate performance of the secondary battery.

In any embodiment, a valence state of surface oxygen of the first positive electrode active material is lower than -1.88 and optionally is in the range of -1.98 to -1.88. This is due to the fact that a higher valence state of oxygen in the compound indicates a higher electron gaining capability, that is, stronger oxidation. In the first positive electrode active material in this application, with the surface valence state of oxygen controlled at a lower level, the reactivity of the surface of the positive electrode material can be reduced and the interface side reactions between the positive electrode material and the electrolyte can be further reduced, thereby further improving the cycling performance and high-temperature storage performance of the secondary battery.

In any embodiment, a compacted density of the positive electrode active material under 3 tons (T) is greater than 2.0 g/cm$^3$, optionally greater than 2.2 g/cm$^3$. A higher compacted density of the first positive electrode active material, that is, a higher weight per unit volume of the active substance, will be more conducive to improving the volumetric energy density of the secondary battery.

A second aspect of this application further provides a battery module. The battery module includes secondary batteries, the secondary battery being any one of the foregoing secondary batteries of this application.

A third aspect of this application further provides a battery pack. The battery pack includes battery modules, the battery module being the foregoing battery module of this application.

A fourth aspect of this application further provides an electric apparatus. The electric apparatus includes at least one of the secondary battery, the battery module, or the battery pack. All of the secondary battery, battery module, and battery pack are the secondary battery, battery module, and battery pack according to this application.

Thus, the battery module and battery pack of this application have relatively high cycling performance and rate characteristics, and especially have the high-temperature stability significantly improved, thereby providing relatively high power cycling stability and high-temperature operating stability for an electric apparatus with the secondary battery, battery module, or battery pack of this application.

## BRIEF DESCRIPTION OF DRAWINGS

FIG. 1 is an XRD spectrum pattern of a positive electrode active material according to an embodiment of this application.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to the embodiment of this application in FIG. 5.
FIG. 7 is a schematic diagram of an electric apparatus using a secondary battery as a power source according to an embodiment of this application.

Description of reference signs:
1. battery pack; 2. upper box body; 3. lower box body; 4. battery module; 5. secondary battery; 51. housing; 52. electrode assembly; and 53. top cover assembly.

## DESCRIPTION OF EMBODIMENTS

The following specifically discloses embodiments of the secondary battery, battery module, battery pack, and electric apparatus of this application with appropriate reference to detailed descriptions of the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum limit values of a range are given as 1 and 2, and maximum limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, and preferably, are performed sequentially. For example, a method including steps (a) and (b) indicates that the method may include steps (a) and (b) performed sequentially, or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": Ais true (or present) and B is false (or not present); A is false (or not present) and B is true (or present); or both A and B are true (or present).

The term "coating layer" herein refers to a substance layer enveloping the core. The core may be completely or partially coated with the substance layer, and use of the "coating layer" is merely for ease of description and is not intended to limit the present invention. Similarly, the term "thickness of the coating layer" refers to a thickness of the substance layer

enveloping the core in a radial direction of the core.

The term "source" herein refers to a compound that is a source of an element. For example, types of "source" include but are not limited to carbonates, sulfates, nitrates, elemental substances, halides, oxides, hydroxides, and the like.

The inventors of this application have found in actual operation that the lithium manganese phosphate positive electrode active material suffers from relatively severe dissolution of manganese ions during deep charging and discharging. Although attempts have been made in the prior art to envelop lithium manganese phosphate with lithium iron phosphate to reduce interface side reactions, such enveloping cannot prevent the manganese dissolved from migrating into the electrolyte. The manganese dissolved is reduced to metal manganese after migrating to a negative electrode. The metal manganese produced is equivalent to "catalyst", which can catalyze the decomposition of SEI (solid electrolyte interphase, solid electrolyte interphase) film on the surface of the negative electrode and produce by-products. A part of the by-products produced is gases that can easily cause the secondary battery swelling, impairing the safety performance of the secondary battery. In addition, another part of the by-products is deposited on surface of the negative electrode, hindering the passage of lithium ions in and out of the negative electrode, causing an increase in the impedance of the secondary battery, and thereby impairing the kinetic performance of the battery. In addition, to supplement the lost SEI, the electrolyte and the active lithium inside the battery are continuously consumed, which has irreversible effects on the capacity retention rate of the secondary battery.

The inventors have found through extensive research that for lithium manganese phosphate positive electrode active materials, problems such as serious dissolution of manganese ions and high surface reactivity may be caused by the Jahn-Teller effect of $Mn^{3+}$ and change of $Li^{+}$ transport channel size after delithiation. For this reason, the inventors have obtained positive electrode active materials that can significantly reduce the dissolution of manganese ions and the lattice change rate and then have good cycling performance, high-temperature storage performance, and safety performance by modifying lithium manganese phosphate.

[Secondary battery]

The secondary battery, also referred to as a rechargeable battery or a storage battery, is a battery whose active material can be activated for continuous use through charging after the battery is discharged.

Generally, the secondary battery includes a positive electrode plate, a negative electrode plate, a separator, and an electrolyte. During charging and discharging of the battery, active ions (for example, lithium ions) are intercalated and deintercalated back and forth between the positive electrode plate and the negative electrode plate. The separator is sandwiched between the positive electrode plate and the negative electrode plate to mainly prevent short circuit between the positive and negative electrodes and allow active ions to pass through. The electrolyte is between the positive electrode plate and the negative electrode plate, playing a role of conducting active ions.

An embodiment of this application provides a secondary battery including a positive electrode plate and a non-aqueous electrolyte, where a positive electrode active material includes a core and a shell enveloping the core, the core including $Li_{1+x}Mn_{1-y}A_yP_{1-z}R_zO_4$, where x is in the range of -0.100 to 0.100, for example, x may be 0.006, 0.004, 0.003, 0.002, 0.001, 0, -0.001, -0.003, -0.004, -0.005, -0.006, -0.007, -0.008, -0.009, and -0.10; y is in the range of 0.001 to 0.500, for example, 0.1, 0.2, 0.25, 0.3, 0.35, 0.4, and 0.45; z is in the range of 0.001 to 0.100, for example, z may be 0.001, 0.002, 0.003, 0.004, 0.005, 0.006, 0.007, 0.008, 0.009, and 0.1; Ais one or more selected from a group consisting of Zn, Al, Na, K, Mg, Mo, W, Ti, V, Zr, Fe, Ni, Co, Ga, Sn, Sb, Nb, and Ge, optionally one or more selected from a group consisting of Fe, Ti, V, Ni, Co, and Mg, and R is one or more selected from a group consisting of B, Si, N, and S; and the shell including a first coating layer enveloping the core and a second coating layer enveloping the first coating layer, where the first coating layer includes a pyrophosphate $MP_2O_7$ and a phosphate $XPO_4$, where M and X are each independently one or more selected from a group consisting of Li, Fe, Ni, Mg, Co, Cu, Zn, Ti, Ag, Zr, Nb, and Al, and the second coating layer includes carbon.

The non-aqueous electrolyte includes a first additive, the first additive including one or more from a group consisting of compounds shown in formula 1 and compounds shown in formula 2,

O
O O
$R_1$ $R_2$

formula 1

formula 2

where $R_1$ and $R_2$ each independently represent any one of a hydrogen atom, a halogen atom, a C1-C6 alkyl group, a C1-C6 haloalkyl group, a C1-C6 alkoxy group, a C2-C6 alkenyl group, or a C2-C6 alkynyl group; and $R_3$, $R_4$, $R_5$, and $R_6$ each independently represent any one of a hydrogen atom, a halogen atom, a C1-C6 alkyl group, a C1-C6 haloalkyl group, a C1-C6 alkoxy group, a C2-C6 alkenyl group, a C2-C6 alkynyl group, or a C2-C6 alkynyloxy group; and $R_3$, $R_4$, $R_5$, and $R_6$ do not all represent a hydrogen atom.

The positive electrode plate generally includes a positive electrode current collector and a positive electrode film layer provided on at least one surface of the positive electrode current collector, and the positive electrode film layer includes a positive electrode active material.

For example, the positive electrode current collector includes two back-to-back surfaces in a thickness direction of the positive electrode current collector, and the positive electrode film layer is disposed on either or both of the two back-to-back surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), or polyethylene (PE)).

The lithium manganese phosphate positive electrode active material in this application is a core-shell structure with two coating layers, where the core includes $Li_{1+x}Mn_{1-y}A_yP_{1-z}R_zO_4$. Element A doping at the manganese site of lithium manganese phosphate in the core helps to decrease the lattice change rate of lithium manganese phosphate during lithium deintercalation and intercalation, improve the structural stability of the lithium manganese phosphate positive electrode material, and greatly reduce the dissolution of manganese. Element R doping at the phosphorus site helps to change difficulty in varying the Mn-O bond length, thereby reducing the migration barrier of lithium ions, promoting the migration of lithium ions, and improving the rate performance of the secondary battery.

The first coating layer of the positive electrode active material in this application includes a pyrophosphate and a phosphate. The high migration barrier (> 1 eV) of transition metals in the pyrophosphate can effectively inhibit the dissolution of transition metals. The crystalline phosphate has excellent ability to conduct lithium ions, and may decrease the amount of impurity lithium on the surface. In addition, as a carbon-containing layer, the second coating layer can effectively improve the electrical conductivity and desolvation ability of $LiMnPO_4$. Moreover, the "barrier" function of the second coating layer can further hinder the migration of manganese ions into the electrolyte and reduce the corrosion of the active material by the electrolyte.

Therefore, with specific element doping and surface coating on lithium manganese phosphate in this application, it is possible to effectively inhibit the dissolution of manganese ions during lithium deintercalation and intercalation, and promote the migration of lithium ions, thereby improving the rate performance of the cell and improving the cycling performance and high-temperature performance of the secondary battery.

It should be noted that, as shown in FIG. 1, in this application, it can be seen by comparing the XRD spectrum patterns of $LiMnPO_4$ with and without doping that positions of main characteristic peaks of the positive electrode active material in this application are basically consistent with those of $LiMnPO_4$ without doping, indicating that the doped lithium manganese phosphate positive electrode active material has no impurity phase, and the improvement of the secondary battery performance mainly comes from the element doping, rather than due to impurity phases.

Moreover, a first additive is introduced into the non-aqueous electrolyte to form a polymer layer on the surface of the coating layer during charging of the lithium-ion battery. This prevents the dissolution of the coating layers, reduces the dissolution of manganese ions, lowers the catalytic activity of the coated carbon, and reduces active lithium consumption, thereby further improving the high-temperature cycling and storage performance of the secondary battery.

The compound of the foregoing formula 1 is selected from common formula 1 compounds in the prior art. In some embodiments, $R_1$ and $R_2$ each independently represent any one of a hydrogen atom, a halogen atom, a C1-C4 alkyl group, a C1-C4 haloalkyl group, a C1-C4 alkoxy group, a C2-C4 alkenyl group, or a C2-C4 alkynyl group, and optionally, $R_1$ and $R_2$ each independently represent any one of a hydrogen atom, a halogen atom, a C1-C4 alkyl group, a C1-C2 haloalkyl group, or a C2-C3 alkenyl group.

The compound of the foregoing formula 2 is selected from common formula 2 compounds in the prior art. In some embodiments, $R_3$, $R_4$, $R_5$, and $R_6$ each independently represent any one of a hydrogen atom, a halogen atom, a C1-C4 alkyl group, a C1-C4 haloalkyl group, a C1-C4 alkoxy group, a C2-C4 alkenyl group, a C2-C4 alkynyl group, or a C2-C4 alkynyloxy group, optionally, $R_3$, $R_4$, $R_5$, and $R_6$ each independently represent any one of a hydrogen atom, a halogen atom, a C1-C3 alkyl group, a C1-C2 haloalkyl group, a C1-C4 alkoxy group, a C2-C4 alkenyl group, or a C2-C4 alkynyloxy group, and $R_3$, $R_4$, $R_5$, and $R_6$ do not all represent a hydrogen atom.

Further, in some embodiments, the first additive includes at least one of the following compounds:

In some embodiments, based on a total weight of the non-aqueous electrolyte, a percentage of the first additive is W1% by weight, W1 being 0.01 to 20, optionally 0.2 to 8 or 0.5 to 5. The mass percentage of the first additive in the electrolyte within the foregoing range can prevent the coating layers of pyrophosphate and phosphate from being dissolved, lower the catalytic activity of the coated carbon, and also avoid an increase in the impedance of the positive electrode, thereby further improving the high-temperature cycling and storage performance of the secondary battery without impairing the capacity and rate performance of the lithium-ion battery.

In some embodiments, the first additive is any one of the following compounds:

The polymers formed by the first additives above are more stable during the charging process, thus improving the dissolution of Mn in the positive electrode active material of this application more efficiently.

The first additive is used to form a polymer layer on the positive electrode, to prevent the dissolution of the coating layers, reduce the dissolution of manganese ions, lower the catalytic activity of the coated carbon, and reduce active lithium consumption. However, the first additive also increases the impedance of the positive electrode and deteriorates the capacity and rate performance of the secondary battery. To address the negative effects caused by the first additive, in some embodiments, the non-aqueous electrolyte also includes a second additive. The second additive includes one or more of cyclic sulfates. Each of the foregoing second additives can be used to generate a film on the positive electrode to form a low-resistance CEI film, further improving the capacity and rate performance of the secondary battery.

In some embodiments, the foregoing cyclic sulfates include at least one of the compounds shown in formula 3,

formula 3,

where q represents 1, 2, or 3; $R_{14}$ represents one of a hydrogen atom, a halogen atom, a carbonyl group, a C1-C6 alkyl group, a C1-C3 haloalkyl group, a C1-C3 alkoxy group, a C1-C3 haloalkoxy group, and a cyclic sulfate group, and optionally $R_{14}$ represents one of a hydrogen atom, a halogen atom, a C1-C4 alkyl group, and a cyclic sulfate group; $R_{15}$ each independently represents one of a hydrogen atom, a halogen atom, a C1-C6 alkyl group, a C1-C3 haloalkyl group, a C1-C3 alkoxy group, a C1-C3 haloalkoxy group, a C1-C6 aryl group, and a cyclic sulfate group, and optionally, $R_{15}$ each independently represents one of a hydrogen atom, a halogen atom, a C1-C4 alkyl group, and a cyclic sulfate group; and optionally, $R_{11}$ and $R_{12}$ are connected and form a C3-C6 cycloalkyl group with C connected therewith.

Optionally, the cyclic sulfates include at least one of the following compounds:

Further optionally, the second additive includes at least one of the following compounds:

In some embodiments, based on the total weight of the non-aqueous electrolyte, a percentage of the second additive is W2% by weight, W2 being 0.01 to 20, optionally 0.1 to 10 or 0.3 to 7, so as to form a low-impedance CEI film with an appropriate thickness.

In some embodiments, based on a total weight of the non-aqueous electrolyte, a percentage of the first additive is W1% by weight, W1 being in the range of 0.01 to 20, optionally 0.1 to 10 or 0.7 to 7, and optionally A is the mass ratio of W2/W1, A being in the range of 0.1 to 10, optionally 0.2 to 5. In a case that the amounts of the first additive and the second additive satisfy the foregoing conditions, the second additive can be used to effectively alleviate the problem of the increase in the impedance of positive electrode caused by the first additive, and further optimize the improvement effect of the first additive on battery capacity and rate performance.

In some embodiments, the non-aqueous electrolyte further includes a third additive. The third additive includes one or more selected from a group consisting of a chain sulfate compound, a sulfite compound, a sultone compound containing an unsaturated bond, a disulfonic acid compound, a nitrile compound, an aromatic compound, an isocyanate compound, a phosphazene compound, a cyclic anhydride compound, a phosphite compound, a phosphate compound, and a borate compound. The third additive can improve the capacity and cycling performance of the secondary battery according to its own performance, and those skilled in the art can select a corresponding third additive according to actual needs.

In some embodiments, the non-aqueous electrolyte further includes an organic solvent. The organic solvent is not particularly limited in type and may be selected according to actual needs. Optionally, the organic solvent includes one or more selected from a group consisting of dimethyl carbonate, diethyl carbonate, dipropyl carbonate, ethyl methyl carbonate, methyl propyl carbonate, ethylene propyl carbonate, ethylene carbonate, propylene carbonate, butylene carbonate, gamma-butyrolactone, methyl formate, ethyl formate, methyl acetate, ethyl acetate, propyl acetate, methyl propionate, ethyl propionate, butyl propionate, and tetrahydrofuran.

In some embodiments, the non-aqueous electrolyte further includes an electrolytic salt. Optionally, the electrolytic salt includes one or more from a group consisting of $LiN(C_xF_{2x+1}SO_2)(C_yF_{2y+1}SO_2)$, $Li(FSO_2)_{2N}$, $LiCF_3SO_3$, $LiPF_6$, $LiBF_4$, $LiAsF_6$, $LiClO_4$, LiBOB, LiDFOB, and LiTFOP, x and y represent positive integers, optionally, x and y are each independently 0, 1, 2, or 3, and a concentration of the electrolytic salt in the non-aqueous electrolyte is in the range of 0.5 M-2 M, optionally 0.8 M-1.5 M, which can ensure the smooth and rapid migration of $Li^+$ in the positive and negative electrodes.

In some embodiments, based on a weight of the core, a coating amount of the first coating layer is C1% by weight, C1 being greater than 0 and less than or equal to 7, optionally 4-5.6. With the coating amount of the first coating layer within the foregoing range, the dissolution of manganese ions can be further inhibited and lithium ion transport can be further promoted. In addition, the following situations can be effectively avoided: A too-small coating amount of the first coating layer may lead to insufficient inhibition of the dissolution of manganese ions by pyrophosphate, and the improvement in lithium ion transport performance may not be significant; and a too-large coating amount of the first coating layer may lead to an excessively thick coating layer, increasing the battery impedance and affecting the kinetic performance of the battery.

In some embodiments, based on a weight of the core, a coating amount of the second coating layer is C2% by weight, C2 being greater than 0 and less than or equal to 6, optionally 3-5. The carbon-containing layer as the second coating layer can play a "barrier" function to avoid direct contact between the positive electrode active material and the electrolyte, thereby reducing the corrosion of the active material by the electrolyte and improving the safety performance of the battery at high temperatures. In addition, the carbon-containing layer has high electrical conductivity and therefore can reduce the internal resistance of the battery, thereby improving the kinetic performance of the battery. However, due to the relatively low gram capacity of carbon materials, a too-large applied amount of the second coating layer may result in a reduction of the overall gram capacity of the positive electrode active material. Therefore, with the coating amount of the second coating layer within the foregoing range, the kinetic performance and safety performance of the secondary battery can be further improved without sacrificing the gram capacity of the positive electrode active material.

In some embodiments, C is defined as a relationship W1/(C1+C2) between the percentage W1 of the first additive, the coating amount C1 of the first coating layer, and the coating amount C2 of the second coating layer, C being in the range of 0.001 to 2, optionally 0.01 to 1. With the C value controlled within the foregoing range, it is possible to avoid that

in a case that the C value is below the foregoing range, no sufficient amount of the first additive is guaranteed to act on the coating layer, effects of inhibiting the dissolution of manganese ions and reducing the decomposition of electrolyte due to catalysis and oxidation caused by the coated carbon are insignificant, and then high-temperature cycling and storage performance cannot be significantly improved. However, in a case that the C value exceeds beyond the foregoing range, an excessive amount of the additive acting on the coating layer makes the impedance of the positive electrode excessively high, impairing the improvement of the gram capacity and rate performance of the lithium-ion battery.

A weight ratio of the pyrophosphate to the phosphate in the first coating layer is in the range of 1:3 to 3:1, optionally 1:3 to 1:1.

An appropriate ratio of the pyrophosphate to the phosphate is conducive to fully utilizing the synergistic effect of the two, and the following situation can be avoided: An excessive amount of pyrophosphate and an insufficient amount of phosphate may lead to an increase in battery impedance; and an excessive amount of phosphate and an insufficient amount of pyrophosphate makes the effect of inhibiting the dissolution of manganese ions insignificant.

In some embodiments, optionally, the phosphate in the first coating layer has an interplanar spacing of 0.345-0.358 nm and an included angle of 24.25°-26.45° in the [111] crystal orientation; and the pyrophosphate in the first coating layer has an interplanar spacing of 0.293-0.326 nm and an included angle of 26.41°-32.57° in the [111] crystal orientation.

With the interplanar spacing and the included angle of the (111) crystal orientation of the phosphate and pyrophosphate in the first coating layer within the foregoing range, the impurity phase in the coating layer can be effectively avoided, thereby improving the gram capacity, cycling performance, and rate performance of the material.

In some embodiments, optionally, a ratio of y to 1-y in the core is in the range of 1:10 to 10:1, optionally 1:4 to 1:1. Herein, y represents the sum of the stoichiometric numbers of doping elements at the Mn site. The energy density and cycling performance of the positive electrode active material can be further improved when the foregoing conditions are satisfied.

In some embodiments, optionally, a ratio of z to 1-z in the core is in the range of 1:9 to 1:999, optionally 1:499 to 1:249. Herein, y represents the sum of the stoichiometric numbers of doping elements at the P site. The energy density and cycling performance of the positive electrode active material can be further improved when the foregoing conditions are satisfied.

The crystallinity of pyrophosphate and phosphate each independently ranges from 10% to 100%, optionally from 50% to 100%.

In the first coating layer of the positive electrode active material in the foregoing embodiments, the pyrophosphate and phosphate with specific crystallinity is conducive to maintaining the structural stability of the first coating layer and reducing lattice defects. This is conducive to fully utilizing the effect of the pyrophosphate on hindering the dissolution of manganese ions and also conducive for the phosphate to reducing the amount of impurity lithium contained on the surface and decreasing the valence state of surface oxygen, thereby reducing interface side reactions between the positive electrode active material and the non-aqueous electrolyte, reducing the consumption of the non-aqueous electrolyte, and improving the cycling performance and safety performance of the secondary battery.

It should be noted that in this application, the crystallinity of the pyrophosphate and phosphate can be adjusted, for example, by adjusting the process conditions of the sintering process, for example sintering temperature and sintering time. The crystallinity of the pyrophosphate and phosphate can be measured by using a method known in the art, for example, an X-ray diffraction method, a density method, an infrared spectroscopy method, a differential scanning calorimetry method, and a nuclear magnetic resonance absorption method.

In some embodiments, optionally, A is at least two selected from Fe, Ti, V, Ni, Co, and Mg.

Simultaneously doping two or more of the foregoing elements at the manganese site in the lithium manganese phosphate positive electrode active material is conducive to enhancing the doping effect to further reduce the lattice change rate, thereby inhibiting the dissolution of manganese and reducing the consumption of the electrolyte and active lithium, and is also conducive to further reducing the surface oxygen activity and reducing interface side reactions between the positive electrode active material and the electrolyte, thereby improving the cycling performance and high-temperature storage performance of the battery.

In some embodiments, optionally, a Li/Mn antisite defect concentration of the positive electrode active material is lower than 4%, optionally lower than 2%.

In the positive electrode active material in the foregoing embodiments, the Li/Mn antisite defect refers to the interchange of the sites of $Li^+$ and $Mn^{2+}$ in $LiMnPO_4$ lattice. Because the $Li^+$ transport channel is a one-dimensional channel and $Mn^{2+}$ has difficulty in migrating in the $Li^+$ transport channel, $Mn^{2+}$ of the antisite defect hinders the $Li^+$ transport. With Li/Mn antisite defect concentration controlled at a low level, the gram capacity and rate performance of $LiMnPO_4$ can be improved. In this application, the antisite defect concentration can be measured, for example, according to JIS K 0131-1996.

In some embodiments, optionally, a lattice change rate of the positive electrode active material is lower than 6%, optionally lower than 4%.

The processes of lithium deintercalation and intercalation of $LiMnPO_4$ are two-phase reactions. The interface stress between two phases is determined by the magnitude of the lattice change rate, and a smaller lattice change rate indicates a lower interface stress, making $Li^+$ transport easier. Therefore, reducing the lattice change rate of the core is beneficial to increase the $Li^+$ transport capacity, thereby further improving the rate performance of the secondary battery.

In some embodiments, optionally, a valence state of surface oxygen of the positive electrode active material is lower than -1.88 and optionally is in the range of - 1.98 to -1.88.

This is due to the fact that a higher valence state of oxygen in the compound indicates a higher electron gaining capability, that is, stronger oxidation. In the lithium manganese phosphate positive electrode active material in this application, with the surface valence state of oxygen controlled at a lower level, the reactivity of the surface of the positive electrode material can be reduced and the interface side reactions between the positive electrode material and the electrolyte can be reduced, thereby improving the cycling performance and high-temperature storage performance of the secondary battery.

In some embodiments, optionally, a compacted density of the positive electrode active material under 3 tons (T) is greater than 2.0 g/cm$^3$, optionally greater than 2.2 g/cm$^3$.

A higher compacted density of the positive electrode active material, that is, a higher weight per unit volume of the active substance, will be more conducive to improving the volumetric energy density of the battery. In this application, the compacted density can be measured, for example, according to GB/T 24533-2009.

The positive electrode active material used for the secondary battery of this application is prepared by using the following method. The preparation method includes the following steps:
providing a core material including $Li_{1+x}Mn_{1-y}A_yP_{1-z}R_zO_4$; providing $MP_2O_7$ powder and an $XPO_4$ suspension including a carbon source; and adding the core material and $MP_2O_7$ powder into the $XPO_4$ suspension including the carbon source for mixing, followed by sintering, to obtain a positive electrode active material.

In some embodiments, the step of providing a core material includes the following steps: step (1): mixing and stirring a manganese source, a source of element A, and an acid in a container to obtain element A-doped manganese salt particles; and step (2): mixing the element A-doped manganese salt particles, a lithium source, a phosphorus source, and a source of element R in a solvent to obtain a slurry, and sintering the slurry under the protection of an inert gas atmosphere to obtain lithium manganese phosphate doped with element A and element R, where the lithium manganese phosphate doped with element A and element R is $Li_{1+x}Mn_{1-y}A_yP_{1-z}R_zO_4$, where x is in the range of -0.100 to 0.100, y is in the range of 0.001 to 0.500, z is in the range of 0.001 to 0.100, A is one or more selected from Zn, Al, Na, K, Mg, Mo, W, Ti, V, Zr, Fe, Ni, Co, Ga, Sn, Sb, Nb, and Ge, optionally one or more of Fe, Ti, V, Ni, Co, and Mg, and R is one or more selected from B, Si, N, and S, optionally R being one element selected from B, Si, N, and S.

Optionally, the step (1) is carried out at a temperature of 20-120°C, optionally 25-80°C; and/or the stirring in the step (1) is carried out at 500-700 rpm for 60-420 minutes, optionally 120-360 minutes.

In some embodiments, the source of element A is one or more selected from elemental substance, sulfates, halides, nitrates, organic acid salts, oxides, and hydroxides of element A; and/or the source of element R is one or more selected from elemental substance, sulfates, halides, nitrates, organic acid salts, oxides or hydroxides, and inorganic acids of element R.

In some embodiments, the $MP_2O_7$ powder is prepared by using the following method: adding a source of element M and a phosphorus source into a solvent to obtain a mixture, adjusting the pH of the mixture to 4-6, stirring the mixture for thorough reaction, followed by drying and sintering, to obtain a final product, where M is one or more selected from Li, Fe, Ni, Mg, Co, Cu, Zn, Ti, Ag, Zr, Nb, or Al. Optionally, the drying in the drying step is carried out at a temperature in the range of 100-300°C, optionally 150-200°C for 4-8 h; and the sintering in the sintering step is carried out at a temperature in the range of 500-800°C, optionally 650-800°C, for 4-10 hours in an inert gas atmosphere.

In some embodiments, in the coating step, the sintering temperature is 500-800°C and the sintering time is 4-10 h.

In some embodiments, the positive electrode film layer may further include other positive electrode active materials well-known in the art and used for secondary batteries. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for secondary batteries. One of these positive electrode active materials may be used alone, or two or more of them may be used in combination. Examples of the lithium transition metal oxide may include but are not limited to at least one of lithium nickel oxide (such as $LiNiO_2$), lithium manganese oxide (such as $LiMnO_2$ and $LiMn_2O_4$), lithium nickel cobalt oxide, lithium manganese cobalt oxide, lithium nickel manganese oxide, and their modified compounds. Examples of the olivine-structured lithium-containing phosphate may include but are not limited to at least one of lithium iron phosphate (for example, $LiFePO_4$ (or LFP for short)), composite materials of lithium iron phosphate and carbon, lithium manganese phosphate (for example, $LiMnPO_4$), composite materials of lithium manganese phosphate and carbon, lithium manganese iron phosphate, and composite materials of lithium manganese iron phosphate and carbon.

In some embodiments, the positive electrode film layer further optionally includes a binder. For example, the

binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetra-fluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

[Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a negative electrode active material well-known in the art and used for batteries. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compounds, silicon-carbon composites, silicon-nitrogen composites, and silicon alloys. The tin-based material may be selected from at least one of elemental tin, tin-oxygen compound, or tin alloy. However, this application is not limited to these materials, but may use other conventional materials that can be used as negative electrode active materials for batteries instead. One type of these negative electrode active materials may be used alone, or two or more types may be used in combination.

In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. For example, the conductive agent may be at least one selected from superconducting carbon, acetylene black, carbon black, Ketjen black, carbon dots, carbon nanotubes, graphene, and carbon nanofibers.

In some embodiments, the negative electrode film layer may further optionally include other adjuvants such as a thickener (for example, sodium carboxymethyl cellulose (CMC-Na)).

In some embodiments, the negative electrode plate may be prepared in the following manner: The constituents used for preparing the negative electrode plate, for example, the negative electrode active material, the conductive agent, the binder, and any other compositions, are dispersed in a solvent (for example, deionized water) to form a negative electrode slurry; and the negative electrode slurry is applied onto the negative electrode current collector, followed by processes such as drying and cold pressing, to obtain the negative electrode plate.

[Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. In a case that the separator is a multi-layer composite film, all layers may be

made of same or different materials, which is not particularly limited.

In some embodiments, the positive electrode plate, the negative electrode plate, and the separator may be made into an electrode assembly through winding or stacking.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft package, for example, a soft pouch. Material of the soft package may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 2 shows a secondary battery 5 of a rectangular structure as an example.

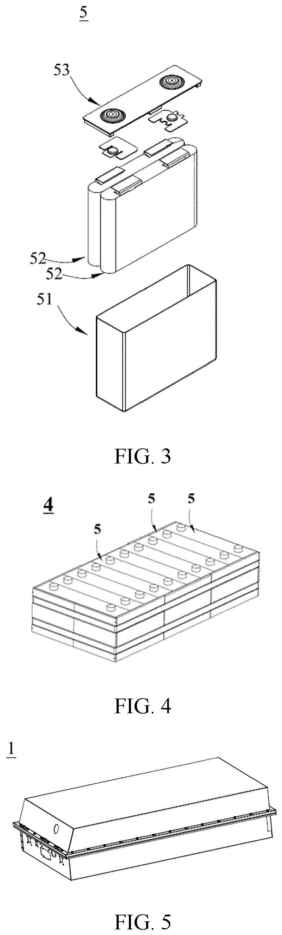

In some embodiments, referring to FIG. 3, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or stacking. The electrode assembly 52 is packaged in the accommodating cavity. The electrolyte infiltrates the electrode assembly 52. There may be one or more electrode assemblies 52 in the secondary battery 5, and persons skilled in the art may make choices according to specific actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Referring to FIG. 4, in the battery module 4, a plurality of secondary batteries 5 may be sequentially arranged in a length direction of the battery module 4. Certainly, the secondary batteries 5 may alternatively be arranged in any other manner. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

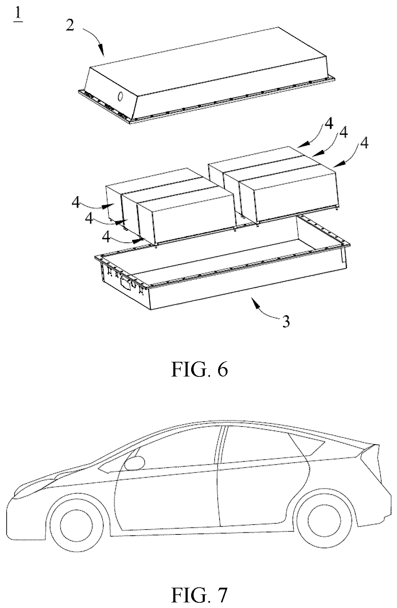

FIG. 5 and FIG. 6 show a battery pack 1 used as an example. Referring to FIG. 5 and FIG. 6, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

FIG. 7 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

[Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

The first additive is selected from the following compounds:

compound 1: ; compound 2: ; compound 3: ; and compound 4: .

The second additive is selected from the following compounds:

compound 5: ; compound 6: ; and compound 7: .

Example 1-1

[Preparation of lithium manganese phosphate positive electrode active material coated with two layers]

**(1) Preparation of co-doped lithium manganese phosphate core**

**Preparation of Fe, Co, and V co-doped manganese oxalate:** 689.5 g manganese carbonate (denoted as $MnCO_3$, the same applies hereinafter), 455.2 g of ferrous carbonate (denoted as $FeCO_3$, the same applies hereinafter), 4.6 g of cobalt sulfate (denoted as $CoSO_4$, the same applies hereinafter), and 4.9 g of vanadium dichloride (denoted as $VCl_2$, the same applies hereinafter) were thoroughly mixed in a mixer for 6 hours; a resulting mixture was transferred to a reactor, with addition of 5 liters of deionized water and 1260.6 g of oxalic acid dihydrate (denoted as $C_2H_2O_4.2H_2O$, the same applies hereinafter); the reactor was heated to 80°C, and the stirring was carried out at 600 rpm for 6 hours until the reaction was terminated (no bubbles were generated), and a Fe, Co, V, and S co-doped manganese oxalate suspension was obtained; and the suspension was then filtered, and a resulting filter cake was dried at 120°C and then ground to obtain Fe, Co, and V co-doped manganese oxalate dihydrate particles with a median particle size Dv50 of 100 nm.

**Preparation of Fe, Co, V, and S co-doped lithium manganese phosphate:** The manganese oxalate dihydrate particles (1793.4 g) obtained in the previous step, 369.0 g of lithium carbonate (denoted as $Li_2CO_3$, the same applies hereinafter), 1.6 g of dilute sulfuric acid with a concentration of 60% (denoted as 60% $H_2SO_4$, the same applies hereinafter), and 1148.9 g of ammonium dihydrogen phosphate (denoted as $NH_4H_2PO_4$, the same applies hereinafter) were added to 20 liters of deionized water, and a resulting mixture was stirred for 10 hours and mixed to uniformity to obtain a slurry; the slurry was transferred to a spray drying apparatus for spray drying and granulation, with the drying temperature set to 250°C and the drying time to 4 hours, and a powder was obtained; and the powder was sintered at 700°C for 4 hours in a protective atmosphere of nitrogen (90% by volume) and hydrogen (10% by volume) to obtain 1572.1 g of Fe, Co, V, and S co-doped lithium manganese phosphate.

**(2) Preparation of lithium iron pyrophosphate and lithium iron phosphate**

**Preparation of lithium iron pyrophosphate powder:** 4.77 g of lithium carbonate, 7.47 g of ferrous carbonate,

14.84 g of ammonium dihydrogen phosphate, and 1.3 g of oxalic acid dihydrate were dissolved in 50 ml of deionized water; a resulting mixture had a pH of 5 and was stirred for 2 hours for the reaction mixture to react thoroughly; then the solution after reaction was warmed up to 80°C and maintained at that temperature for 4 hours to obtain a suspension containing $Li_2FeP_2O_7$, and the suspension was filtered, washed with deionized water, and dried at 120°C for 4 hours to obtain a powder; and the powder was sintered at 650°C in a nitrogen atmosphere for 8 hours, naturally cooled to room temperature, and then ground to obtain $Li_2FeP_2O_7$ powder.

**Preparation of lithium iron phosphate suspension:** 11.1 g of lithium carbonate, 34.8 g of ferrous carbonate, 34.5 g of ammonium dihydrogen phosphate, 1.3 g of oxalic acid dihydrate, and 74.6 g of sucrose (denoted as $C_{12}H_{22}O_{11}$, the same applies hereinafter) were dissolved in 150 ml of deionized water to obtain a mixture, and the mixture was then stirred for 6 hours for thorough reaction; and then the solution after reaction was warmed up to 120°C and maintained at that temperature for 6 hours to obtain a suspension containing $LiFePO_4$.

**(3) Coating**

1572.1 g of the Fe, Co, V, and S co-doped lithium manganese phosphate and 15.72 g of the lithium iron pyrophosphate ($Li_2FeP_2O_7$) powder were added to the lithium iron phosphate ($LiFePO_4$) suspension prepared in the previous step; a resulting mixture was stirred and mixed to uniformity, and then transferred to a vacuum oven to dry at 150°C for 6 hours; a resulting product was then dispersed by sand milling; and after dispersion, a resulting product was sintered in a nitrogen atmosphere at 700°C for 6 hours to obtain a target product: lithium manganese phosphate coated with two layers.

**[Preparation of positive electrode plate]**

The prepared lithium manganese phosphate positive electrode active material coated with two layers, conductive agent acetylene black, and binder polyvinylidene fluoride (PVDF) were added at a weight ratio of 92:2.5:5.5 to N-methylpyrrolidone (NMP), and a resulting mixture was stirred and mixed to uniformity to obtain a positive electrode slurry. Then the positive electrode slurry was uniformly applied on an aluminum foil at 0.280 g/1540.25 $mm^2$, followed by drying, cold pressing, and slitting, to obtain a positive electrode plate.

**[Preparation of negative electrode plate]**

Negative electrode active material artificial graphite, hard carbon, conductive agent acetylene black, binder styrene-butadiene rubber (SBR), thickener sodium carboxymethyl cellulose (CMC-Na) were dissolved at a weight ratio of 90:5:2:2:1 in solvent deionized water, and a resulting mixture was stirred and mixed well, to obtain a negative electrode slurry. The negative electrode slurry was uniformly applied onto a negative electrode current collector copper foil at 0.117 g/1540.25 $mm^2$, followed by drying, cold pressing, and slitting, to obtain a negative electrode plate.

**[Preparation of electrolyte]**

In an argon atmosphere glove box ($H_2O$ < 0.1 ppm, $O_2$ < 0.1 ppm), ethylene carbonate (EC)/ethyl methyl carbonate (EMC) as organic solvents were mixed well at a volume ratio of 3:7, and added with compound 1 (as a first additive, with a mass percentage of 2% in the electrolyte), compound 5 (as a second additive, with a mass percentage of 1% in the electrolyte), and LiPF6 (as an electrolytic salt, with a mass percentage of 1% in the electrolyte). A resulting mixture was stirred well to obtain an electrolyte.

**[Separator]**

A commercially available PP-PE copolymer microporous film with a thickness of 20 μm and an average pore diameter of 80 nm (from Advanced Electronic Technology Co., Ltd, model 20) was used.

**[Preparation of full batteries]**

The positive electrode plate, separator, and negative electrode plate obtained above were stacked in order, so that the separator was placed between the positive and negative electrodes for separation, and winding was performed to obtain a jelly roll. The jelly roll was placed in an outer package, the electrolyte was injected, and the outer package was sealed to obtain full batteries (also referred to as "full batteries" hereinafter).

**[Preparation of button battery]**

The prepared lithium manganese phosphate positive electrode active material coated with two layers, PVDF, and acetylene black were added at a weight ratio of 90:5:5 to NMP and stirred in a drying room to obtain a slurry. The slurry was applied onto an aluminum foil, followed by drying and cold pressing, to obtain a positive electrode plate. The coating amount was 0.2 $g/cm^2$ and the compacted density was 2.0 $g/cm^3$.

A lithium sheet used as the negative electrode, the electrolyte, and the prepared positive electrode plate were assembled together in a button cell box to form a button battery (also referred to as "button cell" hereafter).

**Examples 1-2 to 1-6**

The preparation conditions for lithium manganese phosphate cores in Examples 1-2 to 1-6 were the same as those in Example 1-1, except that neither vanadium dichloride nor cobalt sulfate was used and that 463.4 g of ferrous carbonate, 1.6 g of dilute sulfuric acid with a concentration of 60%, 1148.9 g of ammonium dihydrogen phosphate, and 369.0 g of lithium carbonate were used during the preparation of the co-doped lithium manganese phosphate core.

In addition, the conditions were the same as those in Example 1-1, except that during the preparation of lithium iron pyrophosphate and lithium iron phosphate and during the application of the first coating layer and the second coating layer, the raw materials used were adjusted accordingly in accordance with ratios of the coating amounts shown in Table 1 to the corresponding coating amount in Example 1-1 so that the amounts of $Li_2FeP_2O_7/LiFePO_4$ in Examples 1-2 to 1-6 were respectively 12.6 g/37.7 g, 15.7 g/47.1 g, 18.8 g/56.5 g, 22.0/66.0 g, and 25.1 g/75.4 g, and that the amount of sucrose in Examples 1-2 to 1-6 was 37.3 g.

**Examples 1-7 to 1-10**

The conditions in Examples 1-7 to 1-10 were the same as those in Example 1-3 except that the amounts of sucrose were 74.6 g, 149.1 g, 186.4 g, and 223.7 g, respectively so that the corresponding coating amounts of the carbon layer as the second coating layer were 31.4 g, 62.9 g, 78.6 g, and 94.3 g, respectively.

**Examples 1-11 to 1-14**

The conditions in Examples 1-11 to 1-14 were the same as those in Example 1-7, except that the amounts of various raw materials were adjusted accordingly in accordance with the application amounts shown in Table 1 so that the amounts of $Li_2FeP_2O_7/LiFePO_4$ were respectively 23.6 g/39.3 g, 31.4 g/31.4 g, 39.3 g/23.6 g, and 47.2 g/15.7 g during the preparation of lithium iron pyrophosphate and lithium iron phosphate.

**Example 1-15**

The conditions in Example 1-15 were the same as those in Example 1-14, except that 492.80 g of $ZnCO_3$ was used in place of ferrous carbonate during the preparation of the co-doped lithium manganese phosphate core.

**Examples 1-16 to 1-18**

The conditions in Examples 1-17 to 1-19 were the same as those in Example 1-7, except that 466.4 g of $NiCO_3$, 5.0 g of zinc carbonate, and 7.2 g of titanium sulfate in place of ferrous carbonate were used during the preparation of the co-doped lithium manganese phosphate core in Example 1-16, that 455.2 g of ferrous carbonate and 8.5 g of vanadium dichloride were used during the preparation of the co-doped lithium manganese phosphate core in Example 1-17, and that 455.2 g of ferrous carbonate, 4.9 g of vanadium dichloride, and 2.5 g of magnesium carbonate were used during the preparation of the co-doped lithium manganese phosphate core in Example 1-18.

**Examples 1-19 and 1-20**

The conditions in Examples 1-19 and 1-20 were the same as those in Example 1-18, except that 369.4 g of lithium carbonate and 1.05 g of dilute nitric acid with a concentration of 60% in place of dilute sulfuric acid were used during the preparation of the co-doped lithium manganese phosphate core in Example 1-19, and that 369.7 g of lithium carbonate and 0.78 g of metasilicic acid in place of dilute sulfuric acid were used during the preparation of the co-doped lithium manganese phosphate core in Example 1-20.

**Examples 1-21 and 1-22**

The conditions in Examples 1-21 and 1-22 were the same as those in Example 1-20, except that 632.0 g of manganese carbonate, 463.30 g of ferrous carbonate, 30.5 g of vanadium dichloride, 21.0 g of magnesium carbonate, and 0.78 g of metasilicic acid were used during the preparation of the co-doped lithium manganese phosphate core in Example 1-21; and that 746.9 g of manganese carbonate, 289.6 g of ferrous carbonate, 60.9 g of vanadium dichloride, 42.1 g of magnesium carbonate, and 0.78 g of metasilicic acid were used during the preparation of the co-doped lithium manganese phosphate core in Example 1-22.

**Examples 1-23 and 1-24**

The conditions in Examples 1-23 and 1-24 were the same as those in Example 1-22, except that 804.6 g of manganese carbonate, 231.7 g of ferrous carbonate, 1156.2 g of ammonium dihydrogen phosphate, 1.2 g of boric acid (mass fraction of 99.5%), and 370.8 g of lithium carbonate were used during the preparation of the co-doped lithium manganese phosphate core in Example 1-23; and that 862.1 g of manganese carbonate, 173.8 g of ferrous carbonate, 1155.1 g of ammonium dihydrogen phosphate, 1.86 g of boric acid (mass fraction of 99.5%), and 371.6 g of lithium carbonate were used during the preparation of the co-doped lithium manganese phosphate core in Example 1-24.

**Example 1-25**

The conditions in Example 1-25 were the same as those in Example 1-20, except that 370.1 g of lithium carbonate, 1.56 g of metasilicic acid, and 1147.7 g of ammonium dihydrogen phosphate were used during the preparation of the co-doped lithium manganese phosphate core in Example 1-25.

**Example 1-26**

The conditions in Example 1-26 were the same as those in Example 1-20, except that 368.3 g of lithium carbonate, 4.9 g of dilute sulfuric acid with a mass fraction of 60%, 919.6 g of manganese carbonate, 224.8 g of ferrous carbonate, 3.7 g of vanadium dichloride, 2.5 g of magnesium carbonate, and 1146.8 g of ammonium dihydrogen phosphate were used during the preparation of the co-doped lithium manganese phosphate core in Example 1-26.

**Example 1-27**

The conditions in Example 1-27 were the same as those in Examples 1-20 except that 367.9 g of lithium carbonate, 6.5 g of dilute sulfuric acid with a concentration of 60%, and 1145.4 g of ammonium dihydrogen phosphate were used during the preparation of the co-doped lithium manganese phosphate core in Example 1-27.

**Examples 1-28 to 1-33**

The conditions in Examples 1-28 to 1-33 were the same as those in Example 1-20, except that 1034.5 g of manganese carbonate, 108.9 g of ferrous carbonate, 3.7 g of vanadium dichloride, 2.5 g of magnesium carbonate, the respective amounts of lithium carbonate of 367.6 g, 367.2 g, 366.8 g, 366.4 g, 366.0 g, and 332.4 g, the respective amounts of ammonium dihydrogen phosphate of 1144.5 g, 1143.4 g, 1142.2 g, 1141.1 g, 1139.9 g, and 1138.8 g, and the respective amounts of dilute sulfuric acid with a concentration of 60% of 8.2 g, 9.8 g, 11.4 g, 13.1 g, 14.7 g, and 16.3 g were used during the preparation of the co-doped lithium manganese phosphate core in Examples 1-28 to 1-33.

**Examples 2-1 to 2-4**

**Example 2-1**

The conditions were the same as those in Example 1-1, except that during the preparation of lithium iron pyrophosphate ($Li_2FeP_2O_7$), the sintering temperature in the powder sintering step was 550°C and the sintering time was 1 hour to control the crystallinity of $Li_2FeP_2O_7$ to be 30%, and that during the preparation of lithium iron phosphate ($LiFePO_4$), the sintering temperature in the coating sintering step was 650°C and the sintering time was 2 hours to control the crystallinity of $LiFePO_4$ to be 30%.

**Example 2-2**

The conditions were the same as those in Example 1-1, except that during the preparation of lithium iron pyrophosphate ($Li_2FeP_2O_7$), the sintering temperature in the powder sintering step was 550°C and the sintering time was 2 hours to control the crystallinity of $Li_2FeP_2O_7$ to be 50%, and that during the preparation of lithium iron phosphate ($LiFePO_4$), the sintering temperature in the coating sintering step was 650°C and the sintering time was 3 hours to control the crystallinity of $LiFePO_4$ to be 50%.

**Example 2-3**

The conditions were the same as those in Example 1-1, except that during the preparation of lithium iron pyrophosphate ($Li_2FeP_2O_7$), the sintering temperature in the powder sintering step was 600°C and the sintering time was 3 hours to control the crystallinity of $Li_2FeP_2O_7$ to be 70%, and that during the preparation of lithium iron phosphate ($LiFePO_4$), the sintering temperature in the coating sintering step was 650°C and the sintering time was 4 hours to control the crystallinity of $LiFePO_4$ to be 70%.

**Example 2-4**

The conditions were the same as those in Example 1-1, except that during the preparation of lithium iron pyrophosphate ($Li_2FeP_2O_7$), the sintering temperature in the powder sintering step was 650°C and the sintering time was 4 hours to control the crystallinity of $Li_2FeP_2O_7$ to be 100%, and that during the preparation of lithium iron phosphate ($LiFePO_4$), the sintering temperature in the coating sintering step was 700°C and the sintering time was 6 hours to control the crystallinity of $LiFePO_4$ to be 100%.

**Examples 3-1 to 3-12**

The conditions in Examples 3-1 to 3-12 were the same as those in Example 1-1, except that during the preparation of Fe, Co, and V co-doped manganese oxalate particles, the heating temperature and stirring time in the reactor in Example 3-1 were respectively 60°C and 120 minutes; that the heating temperature and stirring time in the reactor in Example 3-2 were respectively 70°C and 120 minutes; that the heating temperature and stirring time in the reactor in Example 3-3 were respectively 80°C and 120 minutes; that the heating temperature and stirring time in the reactor in Example 3-4 were respectively 90°C and 120 minutes; that the heating temperature and stirring time in the reactor in Example 3-5 were respectively 100°C and 120 minutes; that the heating temperature and stirring time in the reactor in Example 3-6 were respectively 110°C and 120 minutes; that the heating temperature and stirring time in the reactor in Example 3-7 were respectively 120°C and 120 minutes; that the heating temperature and stirring time in the reactor in Example 3-8 were respectively 130°C and 120 minutes; that the heating temperature and stirring time in the reactor in Example 3-9 were respectively 100°C and 60 minutes; that the heating temperature and stirring time in the reactor in Example 3-10 were respectively 100°C and 90 minutes; that the heating temperature and stirring time in the reactor in Example 3-11 were respectively 100°C and 150 minutes; and that the heating temperature and stirring time in the reactor in Example 3-12 were respectively 100°C and 180 minutes.

**Examples 4-1 to 4-7**

**Examples 4-1 to 4-4:** The conditions were the same as those in Example 1-7, except that during the preparation of lithium iron pyrophosphate ($Li_2FeP_2O_7$), the drying temperature and drying time in the drying step were respectively 100°C/4 h, 150°C/6 h, 200°C/6 h, and 200°C/6 h; and that during the preparation of lithium iron pyrophosphate ($Li_2FeP_2O_7$), the sintering temperature and sintering time in the sintering step were respectively 700°C/6 h, 700°C/6 h, 700°C/6 h, and 600°C/6 h.

**Examples 4-5 to 4-7:** The conditions were the same as those in Example 1-12, except that during the coating, the drying temperature and drying time in the drying step were respectively 150°C/6 h, 150°C/6 h, and 150°C/6 h; and that during the coating, the sintering temperature and sintering time in the sintering step were respectively 600°C/4 h, 600°C/6 h, and 800°C/8 h.

**Comparative example 1**

**Preparation of manganese oxalate:** 1149.3 g of manganese carbonate was added to the reactor, with addition of 5 liters of deionized water and 1260.6 g of oxalic acid dihydrate (denoted as $C_2H_2O_4 \cdot 2H_2O$, the same applies hereinafter); the reactor was heated to 80°C, and the stirring was carried out at 600 rpm for 6 hours until the reaction

was terminated (no air bubbles were generated), and a manganese oxalate suspension was obtained; and the suspension was then filtered, and a resulting filter cake was dried at 120°C and then ground to obtain manganese oxalate dihydrate particles with a median particle size Dv50 of 100 nm.

**Preparation of carbon-coated lithium manganese phosphate:** 1789.6 g of manganese oxalate dihydrate particles obtained above, 369.4 g of lithium carbonate (denoted as $Li_2CO_3$, the same applies hereinafter), 1150.1 g of ammonium dihydrogen phosphate (denoted as $NH_4H_2PO_4$, the same applies hereinafter), and 31 g sucrose (denoted as $C_{12}H_{22}O_{11}$, the same applies hereinafter) were added to 20 liters of deionized water, and a resulting mixture was stirred for 10 hours and mixed to uniformity to obtain a slurry; the slurry was transferred to a spray drying apparatus for spray drying and granulation, with the drying temperature set to 250°C and the drying time to 4 hours, and a powder was obtained; and the powder was sintered at 700°C for 4 hours in a protective atmosphere of nitrogen (90% by volume) and hydrogen (10% by volume) to obtain carbon-coated lithium manganese phosphate.

**Comparative example 2**

The conditions in Comparative example 2 were the same as those in Comparative example 1, except that 689.5 g of manganese carbonate was used and that 463.3 g of ferrous carbonate was additionally added.

**Comparative example 3**

The conditions in Comparative example 3 were the same as those in Comparative example 1, except that 1148.9 g of ammonium dihydrogen phosphate and 369.0 g of lithium carbonate were used and that 1.6 g of dilute sulfuric acid with a concentration of 60% was additionally added.

**Comparative example 4**

The conditions in Comparative example 4 were the same as those in Comparative example 1, except that 689.5 g of manganese carbonate, 1148.9 g of ammonium dihydrogen phosphate, and 369.0 g of lithium carbonate were used and that 463.3 g of ferrous carbonate and 1.6 g of dilute sulfuric acid with a concentration of 60% were additionally added.

**Comparative example 5**

The conditions in Comparative example 5 were the same as those in Comparative example 4, except that the following step was additionally added: **Preparation of lithium iron pyrophosphate powder:** 9.52 g of lithium carbonate, 29.9 g of ferrous carbonate, 29.6 g of ammonium dihydrogen phosphate, and 32.5 g of oxalic acid dihydrate were dissolved in 50 ml of deionized water; a resulting mixture had a pH of 5 and was stirred for 2 hours for the reaction mixture to react thoroughly; then the solution after reaction was warmed up to 80°C and maintained at that temperature for 4 hours to obtain a suspension containing $Li_2FeP_2O_7$, and the suspension was filtered, washed with deionized water, and dried at 120°C for 4 hours to obtain a powder; and the powder was sintered at 500°C in a nitrogen atmosphere for 4 hours, naturally cooled to room temperature, and then grounded to control the crystallinity of $Li_2FeP_2O_7$ to be 5%, and that 62.8 g of $Li_2FeP_2O_7$ was used when the carbon-coated material was being prepared.

**Comparative example 6**

The conditions in Comparative example 6 were the same as those in Comparative example 4, except that the following step was additionally added: **Preparation of lithium iron phosphate suspension:** 14.7 g of lithium carbonate, 46.1 g of ferrous carbonate, 45.8 g of ammonium dihydrogen phosphate, and 50.2 g of oxalic acid dihydrate were dissolved in 500 ml of deionized water, and a resulting mixture was stirred for 6 hours for the mixture to react thoroughly; and then the solution after reaction was warmed up to 120°C and maintained at that temperature for 6 hours to obtain a suspension containing $Li_2FeP_2O_7$, and during the preparation of lithium iron phosphate ($LiFePO_4$), the sintering temperature in the coating sintering step was 600°C and the sintering time was 4 hours to control the crystallinity of $LiFePO_4$ to be 8%, and that 62.8 g of $LiFePO_4$ was used when the carbon-coated material was being prepared.

**Comparative example 7**

**Preparation of lithium iron pyrophosphate powder:** 2.38 g of lithium carbonate, 7.5 g of ferrous carbonate, 7.4 g of ammonium dihydrogen phosphate, and 8.1 g of oxalic acid dihydrate were dissolved in 50 ml of deionized water; a resulting mixture had a pH of 5 and was stirred for 2 hours for the reaction mixture to react thoroughly; then the solution after reaction was warmed up to 80°C and maintained at that temperature for 4 hours to obtain a suspension containing

$Li_2FeP_2O_7$, and the suspension was filtered, washed with deionized water, and dried at 120°C for 4 hours to obtain a powder; and the powder was sintered at 500°C in a nitrogen atmosphere for 4 hours, naturally cooled to room temperature, and then ground to control the crystallinity of $Li_2FeP_2O_7$ to be 5%.

**Preparation of lithium iron phosphate suspension:** 11.1 g of lithium carbonate, 34.7 g of ferrous carbonate, 34.4 g of ammonium dihydrogen phosphate, 37.7 g of oxalic acid dihydrate, and 37.3 g of sucrose (denoted as $C_{12}H_{22}O_{11}$, the same applies hereinafter) were dissolved in 1500 ml of deionized water to obtain a mixture, and the mixture was then stirred for 6 hours for thorough reaction; and then the solution after reaction was warmed up to 120°C and maintained at that temperature for 6 hours to obtain a suspension containing $LiFePO_4$.

15.7 g of lithium iron pyrophosphate powder prepared was added to the suspension containing lithium iron phosphate ($LiFePO_4$) and sucrose. The conditions in Comparative example 7 were the same as those in Comparative example 4, except that during the preparation, the sintering temperature in the coating sintering step was 600°C and the sintering time was 4 hours to control the crystallinity of $LiFePO_4$ to be 8%. A carbon-coated positive electrode active material including amorphous lithium iron pyrophosphate and amorphous lithium iron phosphate was obtained.

**Comparative examples 8-11**

The conditions were the same as those in Comparative examples 1 to 7, except that during the preparation of lithium iron pyrophosphate ($Li_2FeP_2O_7$), the drying temperature and drying time in the drying step in Comparative examples 8-10 were respectively 80°C/3 h, 80°C/3 h, and 80°C/3 h; that the sintering temperature and sintering time in the sintering step during the preparation of lithium iron pyrophosphate ($Li_2FeP_2O_7$) in Comparative examples 8-10 were respectively 400°C/3 h, 400°C/3 h, and 350°C/2 h; that the drying temperature and drying time in the drying step during the preparation of lithium iron phosphate ($LiFePO_4$) in Comparative example 11 were 80°C/3 h; and that the amounts of $Li_2FeP_2O_7$ and $LiFePO_4$ in Comparative examples 8-11 were respectively 47.2 g/15.7 g, 15.7 g/47.2 g, 62.8 g/0 g, and 0 g/62.8 g.

[Preparation of positive electrode], [Preparation of negative electrode], [Preparation of electrolyte], [Separator] and [Preparation of battery] in the above examples and comparative examples are all the same as those in Example 1-1.

**[Related parameter test]**

**1. Test for initial gram capacity of button cell**

The prepared button cell was charged to 4.3 V at 0.1C under a voltage of 2.5 V-4.3 V, then charged at constant voltage of 4.3 V until the current is less than or equal to 0.05 mA, left standing for 5 min, then discharged to 2.0 V at 0.1C, and a discharge capacity at this moment was an initial gram capacity and recorded as D0.

**2. Test for average discharge voltage (V) of button cell**

The prepared button cell was left standing for 5 minutes at a constant temperature of 25°C, discharged to 2.5 V at 0.1C, left standing for 5 minutes, charged to 4.3 V at 0.1C, and then charged at a constant voltage of 4.3 V until the current is less than or equal to 0.05 mA. After standing for 5 minutes, the button cell was discharged to 2.5 V at 0.1C, a discharge capacity at this moment was recorded as an initial gram capacity, denoted as D0, discharge energy was recorded as initial energy, denoted as E0, and the average discharge voltage V of the button cell was E0/D0.

**3. Swelling test for full batteries at 60°C**

The prepared full batteries in 100% state of charge (SOC) were stored at 60°C. The open circuit voltages (OCV) and alternating current internal resistances (IMP) of the cells were measured before, during, and after storage to monitor the SOCs, and the volumes of the cells were measured. The full batteries were removed after every 48 hours of storage and left standing for 1 hour. Then the open circuit voltage (OCV) and internal resistance (IMP) were measured, and the cell volumes were measured by a drainage method after the batteries were cooled to room temperature. In the drainage method, first a scale that automatically performs unit conversion on dial data was used to separately measure a weight of the cell, denoted as $F_1$, then the cell was completely placed into deionized water (density known to be 1 g/cm$^3$), and the weight of the cell at this moment was measured as $F_2$. The buoyant force experienced by the cell, denoted as F_buoyancy, is calculated as $F_1$-$F_2$. Then, according to Archimedes' principle, F_buoyancy= $\rho \times g \times V_{displacement}$, the volume V of the cell can be calculated as cell volume $V=(F_1-F_2)/(\rho \times g)$.

According to the OCV and IMP test results, it can be observed that the cells of all the examples always maintained an SOC of 99% or more throughout the test until the end of storage.

After 30 days of storage, the cell volumes were measured and the percentage increases in the cell volumes after

storage relative to the cell volumes before storage were calculated.

In addition, the residual capacity was measured for the cells. The full batteries were charged to 4.3 V at 1C under a voltage of 2.5 V-4.3 V, then charged at constant voltage of 4.3 V until the current is less than or equal to 0.05 mA, left standing for 5 min, and the charge capacity at this moment was recorded as the residual capacity of the cell.

**4. Test for cycling performance of full batteries at 45°C**

The prepared full batteries were charged to 4.3 V at 1C under a voltage of 2.5 V-4.3 V at a constant temperature of 45°C, and then charged at constant voltage of 4.3 V until the current is less than or equal to 0.05 mA. After standing for 5 min, the full batteries were discharged to 2.5 V at 1C, and the discharge capacity at this moment was recorded as D0. The charge/discharge cycle was repeated until the discharge capacity was reduced to 80% of D0. The number of cycles the battery has undergone at this moment was recorded.

**5. Test for lattice change rate**

At a constant temperature of 25°C, the prepared positive electrode active material samples were placed in an XRD instrument (model: Bruker D8 Discover), and the samples were tested at 1°/min. The test data were organized and analyzed, and the lattice constants a0, b0, c0, and v0 (where a0, b0, and c0 represent the lengths of faces of the crystal cell, and v0 denotes the volume of the crystal cell, which can be obtained directly from XRD refinement results) at this moment were calculated with reference to standard PDF cards.

The positive electrode active material sample was used for preparation of a button cell using the foregoing preparation method of button cell, and the button cell was charged at a small rate of 0.05C until the current was reduced to 0.01C. The positive electrode plate in the button cell was then removed and soaked in dimethyl carbonate (DMC) for 8 hours, then dried and powder scraped, and particles with a particle size less than 500 nm were sifted out. Samples were taken and their crystal cell volumes v1 were calculated in the same way as the fresh samples under test above, and $(v0-v1)/v0\times 100\%$ was taken as their lattice change rates (crystal cell volume change rate) before and after complete lithium deintercalation and intercalation were shown in the table.

**6. Test for Li/Mn antisite defect concentration**

The Li/Mn antisite defect concentration was obtained by comparing the XRD results in the "lattice change rate measurement method" with the standard crystal PDF (Powder Diffraction File) cards. Specifically, the XRD results in the "lattice change rate measurement method" were imported into the general structural analysis system (GSAS) software for automatic obtaining of refinement results that contain the occupancy of the different atoms, and the Li/Mn antisite defect concentration was obtained by reading the refinement results.

**7. Test for transition metal dissolution**

The full batteries that was cycled at 45°C until the capacity decayed to 80% was discharged to a cut-off voltage of 2.0 V at a rate of 0.1C. The battery was then disassembled, the negative electrode plate was removed, and 30 discs with a unit area (1540.25 $mm^2$) were randomly taken on the negative electrode plate and tested by using Agilent ICP-OES730 for inductively coupled plasma atomic emission spectroscopy (ICP). The amounts of Fe (if the Mn site of the positive electrode active material was doped with Fe) and Mn were calculated from the ICP results, so as to calculate the amount of Mn (and Fe doping at the Mn site) dissolved after cycling. The test standard is in accordance with EPA-6010D-2014.

**8. Test for valence state of surface oxygen**

5 g of the prepared positive electrode active material sample was taken and used for preparation of a button cell according to the preparation method of button cell described above. The button cell was charged at a small rate of 0.05C until the current was reduced to 0.01C. The positive electrode plate in the button cell was then removed and soaked in dimethyl carbonate (DMC) for 8 hours, then dried and powder scraped, and particles with a particle size less than 500 nm were sifted out. The thus obtained particles were measured by using electron energy loss spectroscopy (EELS; the model of the instrument used was Talos F200S) to obtain energy loss near edge structures (ELNES) that reflect the density of states and energy level distribution of elements. Based on the density of states and energy level distribution, the number of occupied electrons was calculated by integrating the data of the valence band density of states to deduce the valence state of surface oxygen after charging.

### 9. Compacted density measurement

5 g of the prepared positive electrode active material powder was taken and put in a special mold for compaction (CARVER mold, model 13 mm, USA), and then the mold was placed on a compacted density tester. A pressure of 3 T was applied, the thickness of the powder after the pressure was released (the thickness after pressure relief, with an area of 1540.25 $mm^2$ of the container used for testing) was read on the device, and the compacted density was calculated by $\rho$=m/v.

### 10. Determination of crystallinity of pyrophosphate and phosphate by X-ray diffraction method

5 g of the prepared positive electrode active material powder was taken, and a total scattering intensity was measured by X-ray, where the total scattering intensity was a sum of scattering intensities of substances in the entire space and was only related to the intensity of the primary rays, the chemical structure, a total number of electrons participating in the diffraction, that is, the mass, and not to the order state of the sample; then separating crystalline scattering from non-crystalline scattering in a diffraction pattern, where the crystallinity is a ratio of an intensity of the crystalline scattering to the total scattering intensity.

### 11. Interplanar spacing and included angle

1 g of each prepared positive electrode active material powder was taken and placed into a 50 mL test tube, 10 mL of alcohol with a mass fraction of 75% was injected into the test tube and then fully stirred and dispersed for 30 minutes, then an appropriate amount of the solution was taken with a clean disposable plastic pipette and added dropwise on a 300 mesh copper grid, and in this case, part of the powder would remain on the copper grid. The copper grid with the sample was transferred to the TEM (Talos F200s G2) sample cavity for testing, and original TEM test images were obtained and saved in an original image format (xx.dm3).

The original image obtained from the TEM test was opened in DigitalMicrograph software, and Fourier transform was performed (done automatically by the software upon clicking) to obtain a diffraction pattern. A distance from the diffracted spot to the center of the diffraction pattern was measured to obtain the interplanar spacing, and the included angle was calculated according to the Bragg equation.

**Table 1 Performance test results of Examples 1-1 to 1-33 and Comparative examples 1-7**

| Example No. | Core | First coating layer | Second coating layer | Lattice change rate (%) | Li/Mn antisite defect concentration (%) | Valence state of surface oxygen | Amount of Fe and manganese ions dissolved after cycling (ppm) | Button cell gram capacity at 0.1C (mAh/g) | Average discharge voltage of button cell (V) | Cell swelling rate after 30 days of storage at 60°C (%) | Number of cycles corresponding to 80% capacity retention rate at 45°C |
|---|---|---|---|---|---|---|---|---|---|---|---|
| Example 1-1 | $Li_{0.999}Mn_{0.60}Fe_{0.393}V_{0.004}Co_{0.003}P_{0.999}S_{0.001}O_4$ | 1% $Li_2FeP_2O_7$/3% $LiFePO_4$ | 2% Car-bon | 2.4 | 0.4 | -1.98 | 7 | 158.5 | 3.79 | 1.6 | 1394 |
| Example 1-2 | $Li_{0.999}Mn_{0.60}Fe_{0.40}P_{0.999}S$ 0.00104 | 0.8% $Li_2Fe$-$P_2O_7$/2.4% $LiFePO_4$ | 1% Car-bon | 6.6 | 1.2 | -1.97 | 54 | 149.2 | 3.76 | 5.4 | 844 |
| Example 1-3 | $Li_{0.999}Mn_{0.60}Fe_{0.40}P_{0.999}S$ 0.00104 | 1% $Li_2FeP_2O_7$/3% $LiFePO_4$ | 1% Car-bon | 6.5 | 1.1 | -1.97 | 41 | 148.8 | 3.75 | 4.5 | 964 |
| Example 1-4 | $Li_{0.999}Mn_{0.60}Fe_{0.40}P_{0.999}S$ 0.00104 | 1.2% $Li_2Fe$-$P_2O_7$/3.6% $LiFePO_4$ | 1% Car-bon | 6.5 | 0.8 | -1.97 | 27 | 147.6 | 3.74 | 4.1 | 1016 |
| Example 1-5 | $Li_{0.999}Mn_{0.60}Fe_{0.40}P_{0.999}S$ 0.00104 | 1.4% $Li_2Fe$-$P_2O_7$/4.2% $LiFePO_4$ | 1% Car-bon | 6.5 | 0.7 | -1.98 | 17 | 147.1 | 3.74 | 3.1 | 1117 |
| Example 1-6 | $Li_{0.999}Mn_{0.60}Fe_{0.40}P_{0.999}S$ 0.00104 | 1.6% $Li_2Fe$-$P_2O_7$/4.8% $LiFePO_4$ | 1% Car-bon | 6.6 | 0.6 | -1.98 | 13 | 146.2 | 3.73 | 2.4 | 1248 |
| Example 1-7 | $Li_{0.999}Mn_{0.60}Fe_{0.40}P_{0.999}S$ 0.00104 | 1% $Li_2FeP_2O_7$/3% $LiFePO_4$ | 2% Car-bon | 6.5 | 1.0 | -1.97 | 36 | 147.8 | 3.74 | 4.1 | 1016 |
| Example 1-8 | $Li_{0.999}Mn_{0.60}Fe_{0.40}P_{0.999}S$ 0.00104 | 1% $Li_2FeP_2O_7$/3% $LiFePO_4$ | 4% Car-bon | 6.5 | 1.0 | -1.97 | 32 | 146.7 | 3.74 | 3.7 | 1063 |
| Example 1-9 | $Li_{0.999}Mn_{0.60}Fe_{0.40}P_{0.999}S$ 0.00104 | 1% $Li_2FeP_2O_7$/3% $LiFePO_4$ | 5% Car-bon | 6.4 | 1.1 | -1.98 | 25 | 144.6 | 3.74 | 3.1 | 1163 |
| Example 1-10 | $Li_{0.999}Mn_{0.60}Fe_{0.40}P_{0.999}S$ 0.00104 | 1% $Li_2FeP_2O_7$/3% $LiFePO_4$ | 6% Car-bon | 6.4 | 1.1 | -1.98 | 15 | 142.4 | 3.74 | 2.4 | 1280 |
| Example 1-11 | $Li_{0.999}Mn_{0.60}Fe_{0.40}P_{0.999}S$ 0.00104 | 1.5% $Li_2Fe$-$P_2O_7$/2.5% $LiFePO_4$ | 2% Car-bon | 6.5 | 1.1 | -1.97 | 29 | 148.1 | 3.75 | 4.4 | 973 |
| Example 1-12 | $Li_{0.999}Mn_{0.60}Fe_{0.40}P_{0.999}S$ 0.00104 | 2% $Li_2FeP_2O_7$/2% $LiFePO_4$ | 2% Car-bon | 6.6 | 1.0 | -1.96 | 19 | 147.9 | 3.75 | 5.2 | 942 |
| Example 1-13 | $Li_{0.999}Mn_{0.60}Fe_{0.40}P_{0.999}S$ 0.00104 | 2.5% $Li_2Fe$-$P_2O_7$/1.5% $LiFePO_4$ | 2% Car-bon | 6.7 | 1.2 | -1.96 | 15 | 147.5 | 3.75 | 5.9 | 857 |
| Example 1-14 | $Li_{0.999}Mn_{0.60}Fe_{0.40}P_{0.999}S$ 0.00104 | 3% $Li_2FeP_2O_7$/1% $LiFePO_4$ | 2% Car-bon | 6.7 | 1.1 | -1.97 | 8 | 147.3 | 3.76 | 6.4 | 802 |

(continued)

| Example No. | Core | First coating layer | Second coating layer | Lattice change rate (%) | Li/Mn antisite defect concentration (%) | Valence state of surface oxygen | Amount of Fe and manganese ions dissolved after cycling (ppm) | Button cell gram capacity at 0.1C (mAh/g) | Average discharge voltage of button cell (V) | Cell swelling rate after 30 days of storage at 60°C (%) | Number of cycles corresponding to 80% capacity retention rate at 45°C |
|---|---|---|---|---|---|---|---|---|---|---|---|
| Example 1-15 | $Li_{0.990}Mn_{0.60}Zn_{0.40}P_{0.999}S_{0.001}O_4$ | 3% $Li_2FeP_2O_7$/1% $LiFePO_4$ | 2% Carbon | 7.5 | 2.5 | -1.97 | 15 | 139.0 | 3.87 | 7.1 | 900 |
| Example 1-16 | $Li_{0.993}Mn_{0.6}Ni_{0.393}Zn_{0.004}Ti_{0.003}P_{0.999}S_{0.001}O_4$ | 1% $Li_2FeP_2O_7$/3% $LiFePO_4$ | 2% Carbon | 5.4 | 0.8 | -1.97 | 12 | 139.7 | 3.87 | 3.8 | 1023 |
| Example 1-17 | $Li_{0.999}Mn_{0.60}Fe_{0.393}V_{0.007}P_{0.999}S_{0.001}O_4$ | 1% $Li_2FeP_2O_7$/3% $LiFePO_4$ | 2% Carbon | 4.2 | 0.6 | -1.97 | 11 | 153.5 | 3.79 | 2.7 | 1303 |
| Example 1-18 | $Li_{0.999}Mn_{0.60}Fe_{0.393}V_{0.004}Mg_{0.003}P_{0.999}S_{0.001}O_4$ | 1% $Li_2FeP_2O_7$/3% $LiFePO_4$ | 2% Carbon | 2.6 | 0.5 | -1.97 | 9 | 155.9 | 3.81 | 2.3 | 1307 |
| Example 1-19 | $LiMn_{0.60}Fe_{0.393}V_{0.004}Mg_{0.003}P_{0.999}N_{0.001}O_4$ | 1% $Li_2FeP_2O_7$/3% $LiFePO_4$ | 2% Carbon | 2.3 | 0.5 | -1.98 | 8 | 157.9 | 3.81 | 1.8 | 1416 |
| Example 1-20 | $Li_{1.001}Mn_{0.60}Fe_{0.393}V_{0.004}Mg_{0.003}P_{0.999}Si_{0.001}O_4$ | 1% $Li_2FeP_2O_7$/3% $LiFePO_4$ | 2% Carbon | 2.4 | 0.7 | -1.98 | 9 | 157.7 | 3.81 | 2.0 | 1436 |
| Example 1-21 | $Li_{1.001}Mn_{0.55}Fe_{0.40}V_{0.025}Mg_{0.025}P_{0.999}Si_{0.001}O_4$ | 1% $Li_2FeP_2O_7$/3% $LiFePO_4$ | 2% Carbon | 2.2 | 0.5 | -1.98 | 7 | 158.7 | 3.73 | 1.7 | 1532 |
| Example 1-22 | $Li_{1.001}Mn_{0.65}Fe_{0.25}V_{0.05}Mg_{0.05}P_{0.999}Si_{0.001}O_4$ | 1% $Li_2FeP_2O_7$/3% $LiFePO_4$ | 2% Carbon | 2.5 | 0.8 | -1.98 | 10 | 157.2 | 3.84 | 2.4 | 1347 |
| Example 1-23 | $Li_{1.004}Mn_{0.7}Fe_{0.2}V_{0.05}Mg_{0.05}P_{0.998}B_{0.002}O_4$ | 1% $Li_2FeP_2O_7$/3% $LiFePO_4$ | 2% Carbon | 2.6 | 0.8 | -1.98 | 9 | 157.4 | 3.84 | 2.1 | 1331 |
| Example 1-24 | $Li_{1.006}Mn_{0.75}Fe_{0.15}V_{0.05}Mg_{0.05}P_{0.997}B_{0.003}O_4$ | 1% $Li_2FeP_2O_7$/3% $LiFePO_4$ | 2% Carbon | 2.6 | 0.8 | -1.98 | 9 | 157.7 | 3.84 | 2.2 | 1395 |
| Example 1-25 | $Li_{1.002}Mn_{0.60}Fe_{0.393}V_{0.004}Mg_{0.003}P_{0.998}Si_{0.002}O_4$ | 1% $Li_2FeP_2O_7$/3% $LiFePO_4$ | 2% Carbon | 2.3 | 0.7 | -1.98 | 9 | 157.6 | 3.79 | 2.0 | 1437 |
| Example 1-26 | $Li_{0.997}Mn_{0.80}Fe_{0.194}V_{0.003}Mg_{0.003}P_{0.997}S_{0.003}O_4$ | 1% $Li_2FeP_2O_7$/3% $LiFePO_4$ | 2% Carbon | 2.8 | 0.9 | -1.98 | 10 | 156.4 | 3.86 | 2.5 | 1184 |
| Example 1-27 | $Li_{0.996}Mn_{0.60}Fe_{0.393}V_{0.004}Mg_{0.003}P_{0.996}S_{0.004}O_4$ | 1% $Li_2FeP_2O_7$/3% $LiFePO_4$ | 2% Carbon | 2.2 | 0.6 | -1.98 | 9 | 157.8 | 3.79 | 2.0 | 1464 |
| Example 1-28 | $Li_{0.995}Mn_{0.9}Fe_{0.094}V_{0.003}Mg_{0.003}P_{0.995}S_{0.005}O_4$ | 1% $Li_2FeP_2O_7$/3% $LiFePO_4$ | 2% Carbon | 3.2 | 1.1 | -1.96 | 11 | 157.1 | 3.90 | 2.7 | 1143 |

(continued)

| Example No. | Core | First coating layer | Second coating layer | Lattice change rate (%) | Li/Mn antisite defect concentration (%) | Valence state of surface oxygen | Amount of Fe and manganese ions dissolved after cycling (ppm) | Button cell gram capacity at 0.1C (mAh/g) | Average discharge voltage of button cell (V) | Cell swelling rate after 30 days of storage at 60°C (%) | Number of cycles corresponding to 80% capacity retention rate at 45°C |
|---|---|---|---|---|---|---|---|---|---|---|---|
| Example 1-29 | $Li_{0.994}Mn_{0.90}Fe_{0.094}V_{0.003}Mg_{0.003}P_{0.994}S_{0.006}O_4$ | 1% $Li_2FeP_2O_7$/3% $LiFePO_4$ | 2% Carbon | 3.0 | 1.2 | -1.95 | 12 | 156.4 | 3.90 | 2.7 | 1090 |
| Example 1-30 | $Li_{0.993}Mn_{0.90}Fe_{0.094}V_{0.003}Mg_{0.003}P_{0.993}S_{0.007}O_4$ | 1% $Li_2FeP_2O_7$/3% $LiFePO_4$ | 2% Carbon | 2.8 | 1.4 | -1.95 | 14 | 156.1 | 3.90 | 2.6 | 995 |
| Example 1-31 | $Li_{0.992}Mn_{0.90}Fe_{0.094}V_{0.003}Mg_{0.003}P_{0.992}S_{0.008}O_4$ | 1% $Li_2FeP_2O_7$/3% $LiFePO_4$ | 2% Carbon | 2.6 | 1.4 | -1.94 | 14 | 155.7 | 3.90 | 2.6 | 963 |
| Example 1-32 | $Li_{0.991}Mn_{0.90}Fe_{0.094}V_{0.003}Mg_{0.003}P_{0.991}S_{0.009}O_4$ | 1% $Li_2FeP_2O_7$/3% $LiFePO_4$ | 2% Carbon | 2.4 | 1.2 | -1.94 | 15 | 155.1 | 3.90 | 2.4 | 942 |
| Example 1-33 | $Li_{0.9}Mn_{0.90}Fe_{0.094}V_{0.003}Mg_{0.003}P_{0.9}S_{0.1}O_4$ | 1% $Li_2FeP_2O_7$/3% $LiFePO_4$ | 2% Carbon | 2.1 | 0.9 | -1.94 | 17 | 154.8 | 3.90 | 2.3 | 923 |
| Comparative example 1 | $LiMnPO_4$ | - | 1% carbon | 11.4 | 3.2 | -1.55 | 1751 | 125.9 | 4.03 | 41.3 | 194 |
| Comparative example 2 | $LiMn_{0.60}Fe_{0.40}PO_4$ | - | 1% carbon | 8.7 | 2.8 | -1.76 | 1357 | 135.1 | 3.77 | 36.1 | 376 |
| Comparative example 3 | $Li_{0.999}MnP_{0.999}S_{0.001}O_4$ | - | 1% carbon | 9.8 | 2.5 | -1.66 | 1611 | 128.9 | 4.06 | 38.7 | 280 |
| Comparative example 4 | $Li_{0.999}Mn_{0.60}Fe_{0.40}P_{0.999}S_{0.001}O_4$ | - | 1% carbon | 6.7 | 1.8 | -1.83 | 1087 | 140.8 | 3.79 | 32.7 | 438 |
| Comparative example 5 | $Li_{0.999}Mn_{0.60}Fe_{0.40}P_{0.999}S_{0.001}O_4$ | 4% amorphous $Li_2FeP_2O_7$ | 1% carbon | 6.5 | 1.8 | -1.90 | 177 | 140.6 | 3.74 | 10.6 | 545 |
| Comparative example 6 | $Li_{0.999}Mn_{0.60}Fe_{0.40}P_{0.999}S_{0.001}O_4$ | 4% amorphous $LiFePO_4$ | 1% carbon | 6.6 | 1.8 | -1.91 | 270 | 140.5 | 3.75 | 9.8 | 554 |
| Comparative example 7 | $Li_{0.999}Mn_{0.60}Fe_{0.40}P_{0.999}S_{0.001}O_4$ | 1% amorphous $Li_2FeP_2O_7$ + 3% amorphous $LiFePO_4$ | 1% carbon | 6.6 | 1.8 | -1.90 | 148 | 140.4 | 3.76 | 7.3 | 716 |

Note: (1) The crystallinity of $Li_2FeP_2O_7$ and $LiFePO_4$ in Examples 1-1 to 1-33 are all 100%; and (2) in Comparative examples 5 to 7, the crystallinity of $Li_2FeP_2O_7$ is 5% and the crystallinity of $LiFePO_4$ is 8%.

It can be learned from Examples 1-1 to 1-33 and Comparative examples 1 to 4 that the presence of the first coating layer is conducive to reducing the Li/Mn antisite defect concentration and amount of Fe and manganese ions dissolved after cycling in the resulting material, increasing the button cell gram capacity of the battery, and improving the safety performance and cycling performance of the battery. When other elements are doped at the Mn and phosphorus sites, respectively, the lattice change rate, antisite defect concentration, and amount of Fe and manganese ions dissolved in the resulting material can be significantly reduced, the gram capacity of the battery can be increased, and the safety performance and cycling performance of the battery can be improved.

It can be learned from Examples 1-1 to 1-6 that as the amount of the first coating layer increases from 3.2% to 6.4%, in the resulting material, the Li/Mn antisite defect concentration is gradually decreased, the amount of Fe and manganese ions dissolved after cycling is gradually decreased, and the safety performance and 45°C cycling performance of the corresponding battery are improved, but the button cell gram capacity is slightly decreased. Optionally, the corresponding battery has the best overall performance when the total amount of the first coating layer is 4-5.6% by weight.

It can be learned from Example 1-3 and Examples 1-7 to 1-10 that as the amount of the second coating layer increases from 1% to 6%, in the resulting material, the Li/Mn antisite defect concentration is gradually decreased, the amount of Fe and manganese ions dissolved after cycling is gradually decreased, and the safety performance and 45°C cycling performance of the corresponding battery are improved, but the button cell gram capacity is slightly decreased. Optionally, the corresponding battery has the best overall performance when the total amount of the second coating layer is 3-5% by weight.

It can be learned from Examples 1-11 to 1-15 and Comparative examples 5 and 6 that when both $Li_2FeP_2O_7$ and $LiFePO_4$ are present in the first coating layer, in particular $Li_2FeP_2O_7$ and $LiFePO_4$ at a weight ratio in the range of 1:3 to 3:1, and particularly 1:3 to 1:1, the improvement in battery performance is more significant.

Table 2 Performance test results of Examples 2-1 to 2-4

| Example No. | First coating layer | Crystallinity of pyrophosphate and phosphate[1] | Lattice change rate (%) | Li/Mn antisite defect concentration (%) | Valence state of surface oxygen | Amount of Fe and manganese ions dissolved after cycling (ppm) | Button cell capacity at 0.1C (mAh/g) | Average discharge voltage of button cell (V) | Cell swelling rate after 30 days of storage at 60°C (%) | Cycling capacity retention rate at 45°C (%) |
|---|---|---|---|---|---|---|---|---|---|---|
| Example 2-1 | 1% $Li_2FeP_2O_7$/3% $LiFePO_4$ | 30% | 6.3 | 1.9 | -1.88 | 125 | 145.5 | 3.73 | 4.8 | 733 |
| Example 2-2 | 1% $Li_2FeP_2O_7$/3% $LiFePO_4$ | 50% | 4.7 | 1.2 | -1.89 | 82 | 149.5 | 3.75 | 4.0 | 912 |
| Example 2-3 | 1% $Li_2FeP_2O_7$/3% $LiFePO_4$ | 70% | 3.5 | 0.8 | -1.91 | 25 | 151.6 | 3.76 | 3.2 | 1078 |
| Example 2-4 | 1% $Li_2FeP_2O_7$/3% $LiFePO_4$ | 100% | 2.4 | 0.4 | -1.98 | 7 | 158.5 | 3.80 | 1.6 | 1394 |
| | [1]: means that the crystallinity of $Li_2FeP_2O_7$ and $LiFePO_4$ is 30%, 50%, 70%, and 100%, respectively. | | | | | | | | | |

It can be seen from Table 2 that as the crystallinity of pyrophosphate and phosphate in the first coating layer gradually increases, in the corresponding material, the lattice change rate, Li/Mn antisite defect concentration, and amount of Fe and manganese ions dissolved are gradually decreased, and in the battery, the button cell capacity is gradually increased and the safety performance and cycling performance are gradually improved.

Table 3 Performance test results of Examples 3-1 to 3-12

| Example No. | Temperature in reactor (°C) | Stirring time (min) | Lattice change rate (%) | Li/Mn antisite defect concentration (%) | Valence state of surface oxygen | Amount of Fe and manganese ions dissolved after cycling (ppm) | Button cell capacity at 0.1C (mAh/g) | Average discharge voltage of button cell (V) | Cell swelling rate after 30 days of storage at 60°C (%) | Number of cycles at 80% capacity retention rate at 45°C |
|---|---|---|---|---|---|---|---|---|---|---|
| Example 3-1 | 60 | 120 | 5.6 | 2.4 | -1.98 | 42 | 155.5 | 3.68 | 4.8 | 1157 |
| Example 3-2 | 70 | 120 | 4.8 | 1.9 | -1.98 | 31 | 156.0 | 3.70 | 4.0 | 1263 |
| Example 3-3 | 80 | 120 | 3.7 | 1.3 | -1.98 | 24 | 156.7 | 3.73 | 3.2 | 1339 |
| Example 3-4 | 90 | 120 | 2.9 | 1.1 | -1.98 | 14 | 158.1 | 3.76 | 2.6 | 1370 |
| Example 3-5 | 100 | 120 | 2.5 | 0.5 | -1.98 | 8 | 158.8 | 3.79 | 2.0 | 1393 |
| Example 3-6 | 110 | 120 | 2.8 | 1.2 | -1.98 | 16 | 157.0 | 3.74 | 3.1 | 1320 |
| Example 3-7 | 120 | 120 | 3.7 | 2.1 | -1.98 | 32 | 155.1 | 3.70 | 4.1 | 1238 |
| Example 3-8 | 130 | 120 | 4.5 | 3.4 | -1.98 | 39 | 154.0 | 3.65 | 5.4 | 1035 |
| Example 3-9 | 100 | 60 | 4.9 | 3.1 | -1.98 | 32 | 155.7 | 3.77 | 4.2 | 1072 |
| Example 3-10 | 100 | 90 | 4.1 | 2.5 | -1.98 | 23 | 156.6 | 3.78 | 3.6 | 1152 |
| Example 3-11 | 100 | 150 | 3.5 | 1.1 | -1.98 | 13 | 158.1 | 3.80 | 2.6 | 1243 |
| Example 3-12 | 100 | 180 | 2.5 | 0.5 | -1.98 | 9 | 158.4 | 3.80 | 2.0 | 1362 |
| Remarks | 1. The temperature in the reactor and the stirring time are the parameters used during the preparation of element A doped manganese oxalate (that is, step (1)).<br>2. Type of doping element and doping amount $Li_{0.999}Mn_{0.60}Fe_{0.393}V_{0.004}Co_{0.003}P_{0.999}S_{0.001}O_4$. | | | | | | | | | |

It can be seen from Table 3 that adjustment of the reaction temperature and reaction time in the reactor during the preparation of manganese oxalate particles can further improve the various properties of the positive electrode material in this application. For example, when the reaction temperature is gradually increased from 60°C to 130°C, the lattice change rate and Li/Mn antisite defect concentration are decreased first and then increased, and the amount of metal dissolved after cycling and the safety performance also correspondingly present a similar pattern, while the button cell capacity and the cycling performance are increased first and then decreased with the increase in temperature. With the reaction temperature controlled to be constant, adjustment of the reaction time can also present a similar pattern.

**Table 4 Performance test results of Examples 4-1 to 4-7 and Comparative examples 8–11**

| Example No. | $Li_2FeP_2O_7$:$LiFePO_4$ (weight ratio) | Drying temperature (°C) | Drying time (h) | Sintering temperature (°C) | Sintering time (h) | Lattice spacing of pyrophosphate in first coating layer (nm) | Included angle of pyrophosphate in first coating layer (°) | Lattice spacing of phosphate in first coating layer (nm) | Included angle of phosphate in first coating layer (°) | Lattice change rate (%) | Li/Mn antisite defect concentration (%) | Valence state of surface oxygen | Amount of Fe and manganese ions dissolved after cycling (ppm) | Button cell capacity at 0.1C (mAh/g) | Average discharge voltage of button cell (V) | Cell swelling rate after 30 days of storage at 60°C (%) | Number of cycles at 80% capacity retention rate at 45°C |
|---|---|---|---|---|---|---|---|---|---|---|---|---|---|---|---|---|---|
| Example 4-1 | 1:3 | 100 | 4 | 700 | 6 | 0.303 | 29.496 | 0.348 | 25.562 | 2.9 | 0.6 | −1.97 | 36 | 155.7 | 3.72 | 2.9 | 1242 |
| Example 4-2 | 1:3 | 150 | 6 | 700 | 6 | 0.303 | 29.496 | 0.348 | 25.562 | 2.6 | 0.6 | −1.98 | 36 | 158.1 | 3.79 | 2.0 | 1414 |
| Example 4-3 | 1:3 | 200 | 6 | 700 | 6 | 0.303 | 29.496 | 0.348 | 25.562 | 2.7 | 0.6 | −1.98 | 36 | 156.8 | 3.74 | 2.6 | 1341 |
| Example 4-4 | 1:3 | 200 | 6 | 600 | 6 | 0.303 | 29.496 | 0.348 | 25.562 | 2.9 | 1.1 | −1.95 | 36 | 154.1 | 3.70 | 3.3 | 1033 |
| Example 4-5 | 1:1 | 150 | 6 | 600 | 4 | 0.303 | 29.496 | 0.348 | 25.562 | 2.8 | 1.2 | −1.94 | 19 | 155.8 | 3.72 | 3.0 | 940 |
| Example 4-6 | 1:1 | 150 | 6 | 600 | 6 | 0.303 | 29.496 | 0.348 | 25.562 | 2.6 | 0.8 | −1.95 | 19 | 156.6 | 3.73 | 2.6 | 1011 |
| Example 4-7 | 1:1 | 150 | 6 | 800 | 8 | 0.303 | 29.496 | 0.348 | 25.562 | 2.5 | 0.4 | −1.97 | 19 | 157.2 | 3.75 | 2.3 | 1095 |
| Comparative example 8 | 1:3 | 80 | 3 | 400 | 3 | - | - | - | - | 3.9 | 1.8 | −1.91 | 76 | 152.0 | 3.73 | 9.1 | 801 |
| Comparative example 9 | 1:1 | 80 | 3 | 400 | 3 | - | - | - | - | 3.6 | 1.6 | −1.93 | 66 | 151.8 | 3.77 | 6.4 | 704 |
| Comparative example 10 | $Li_2FeP_2O_7$ only | 80 | 3 | 350 | 2 | - | - | - | - | 3.7 | 1.7 | −1.86 | 59 | 150.3 | 3.74 | 10.8 | 408 |
| Comparative example 11 | $LiFePO_4$ only | 80 | 3 | - | - | - | - | - | - | 3.4 | 1.4 | −1.93 | 80 | 152.6 | 3.76 | 4.4 | 541 |

It can be seen from Table 4 that during the preparation of lithium iron pyrophosphate by the method in this application, adjustment of the drying temperature/time and sintering temperature/time during the preparation can improve the properties of the resulting material, thereby improving the battery performance. It can be seen from the Comparative examples 8-11 that when the drying temperature during the preparation of lithium iron pyrophosphate is lower than 100°C or the temperature in the sintering step is lower than 400°C, the $Li_2FeP_2O_7$ desired to be prepared by this application cannot be obtained, therefore failing to improve the material performance and the performance of the battery including the resulting material.

Example 5-43

The positive electrode active materials, button cells, and full batteries were prepared in the same manner as those in Example 1-18, but the compositions of the electrolyte were changed, as shown in Table 5 below.

In addition, performance data of the button cells or full batteries of Examples 5-43 measured according to the foregoing performance test method are as shown in Table 6.

**Table 5 Compositions of electrolyte**

| Example No. | First additive | Percentage W1 (%) | Second additive | Percentage W2 (%) | C defined as W2/W1 | Electrolytic salt | Concentration of electrolytic salt (M) | D defined as W1/(C1+C2) |
|---|---|---|---|---|---|---|---|---|
| 5 | Same as Example 1-18 | 0.3 | Same as Example 1-18 | | 3.33 | Same as Example 1-18 | | 0.05 |
| 6 | | 7 | | | 0.14 | | | 1.17 |
| 7 | | 0.1 | | | 10 | | | 0.02 |
| 8 | | 10 | | | 0.10 | | | 1.67 |
| 9 | | 0.01 | | | 100 | | | 0.00 |
| 10 | | 20 | | | 0.05 | | | 3.33 |
| 11 | | 0.005 | | | 200 | | | 0.00 |
| 12 | | 21 | | | 0.05 | | | 3.50 |
| 13 | Same as Example 1-18 | | | 0.3 | 0.15 | Same as Example 1-18 | | 0.33 |
| 14 | | | | 5 | 2.50 | | | 0.33 |
| 15 | | | | 0.1 | 0.05 | | | 0.33 |
| 16 | | | | 10 | 5.00 | | | 0.33 |
| 17 | | | | 0.01 | 0.005 | | | 0.33 |
| 18 | | | | 20 | 10 | | | 0.33 |
| 19 | Same as Example 1-18 | | | | | | 0.8 | 0.33 |
| 20 | | | | | | | 1.5 | 0.33 |
| 21 | | | | | | | 0.5 | 0.33 |

| Example No. | First additive | Percentage W1 (%) | Second additive | Percentage W2 (%) | C defined as W2/W1 | Electrolytic salt | Concentration of electrolytic salt (M) | D defined as W1/(C1+C2) |
|---|---|---|---|---|---|---|---|---|
| 22 | | | | | | | 2 | 0.33 |
| 25 | Same as Example 1-18 | 3 | Same as Example 1-18 | 0.3 | 0.1 | Same as Example 1-18 | | 0.8 |
| 26 | | 0.3 | | 3 | 10 | | | 0.2 |
| 27 | | 0.3 | | 1 | 3.3 | | | 0.05 |
| 28 | | 6 | | 2 | 0.3 | | | 1 |

(continued)

| Example No. | First additive | Percentage W1 (%) | Second additive | Percentage W2 (%) | C defined as W2/W1 | Electrolytic salt | Concentration of electrolytic salt (M) | D defined as W1/(C1+C2) |
|---|---|---|---|---|---|---|---|---|
| 37 | Compound 2 | Same as Example 1-18 | | | | | | |
| 38 | Compound 3 | | | | | | | |
| 39 | Compound 4 | | | | | | | |
| 40 | Same as Example 1-18 | | Compound 6 | Same as Example 1-18 | | | | |
| 41 | | | Compound 7 | | | | | |
| 42 | Same as Example 1-18 | | | | | $Li(FSO_2)_2N$ | Same as Example 1-18 | |
| 43 | | | | | | $LiPF_6$+$Li(FSO_2)_2N$ , with an equal molar percentage of the two | | |

**Table 6 Performance data of button cells or full batteries of Examples 5-43 measured according to the foregoing performance test method**

| Example No. | Amount of Fe and manganese ions dissolved after cycling (ppm) | Button cell gram capacity at 0.1C (mAh/g) | Average discharge voltage of button cell (V) | Cell swelling rate after 30 days of storage at 60°C (%) | Number of cycles corresponding to 80% capacity retention rate at 45°C |
|---|---|---|---|---|---|
| Example 5 | 17 | 155.1 | 3.80 | 3 | 1101 |
| Example 6 | 8 | 154.2 | 3.79 | 2.2 | 1260 |
| Example 7 | 30 | 152.5 | 3.79 | 4.1 | 1042 |
| Example 8 | 7 | 151.1 | 3.78 | 2.1 | 1067 |
| Example 9 | 56 | 147.1 | 3.77 | 5.6 | 900 |
| Example 10 | 6 | 145.6 | 3.76 | 2 | 943 |
| Example 11 | 123 | 143.4 | 3.76 | 6.5 | 880 |
| Example 12 | 6 | 142.5 | 3.75 | 2 | 856 |
| Example 13 | 12 | 155.1 | 3.80 | 2.6 | 1267 |
| Example 14 | 8 | 154.2 | 3.79 | 2.1 | 1291 |
| Example 15 | 21 | 154.5 | 3.78 | 3.5 | 1158 |
| Example 16 | 7 | 153.1 | 3.78 | 2 | 1190 |
| Example 17 | 30 | 148.8 | 3.77 | 4.7 | 1054 |
| Example 18 | 6 | 147.0 | 3.76 | 2.0 | 1089 |
| Example 19 | 20 | 155.1 | 3.79 | 2.8 | 1267 |
| Example 20 | 8 | 154.8 | 3.78 | 2.1 | 1299 |
| Example 21 | 56 | 153.1 | 3.78 | 3.9 | 1101 |
| Example 22 | 6 | 151.9 | 3.77 | 2 | 1178 |
| Example 25 | 13 | 154.2 | 3.80 | 2.4 | 1289 |
| Example 26 | 20 | 153.6 | 3.77 | 2.9 | 1123 |
| Example 27 | 17 | 155.1 | 3.80 | 3 | 1101 |
| Example 28 | 9 | 155.2 | 3.79 | 2.2 | 1230 |
| Example 37 | 20 | 155.0 | 3.78 | 3.0 | 1256 |
| Example 38 | 14 | 155.4 | 3.79 | 2.8 | 1289 |
| Example 39 | 22 | 149.2 | 3.78 | 3.2 | 1230 |
| Example 40 | 15 | 155.4 | 3.78 | 4.0 | 1256 |
| Example 41 | 12 | 155.7 | 3.81 | 2.6 | 1299 |
| Example 42 | 7 | 160.3 | 3.80 | 5.0 | 1198 |
| Example 43 | 8 | 160.0 | 3.81 | 3.0 | 1250 |

In addition, with the electrolyte in full batteries of Examples 1-1 to 1-33, 2-1 to 2-4, 3-1 to 3-12, and 4-1 to 4-4 replaced by an electrolyte obtained by mixing organic solvents ethylene carbonate (EC) and ethyl methyl carbonate (EMC) at a volume ratio of 3:7 well, adding and dissolving 12.5% by weight (based on the weight of the organic solvents) $LiPF_6$ into the organic solvents, and stirring the mixture well, and the electrolyte in button cells in the foregoing examples replaced by an electrolyte with 1 mol/L $LiPF_6$ in a solution containing ethylene carbonate (EC), diethyl carbonate (DEC), dimethyl carbonate (DMC) at a volume ratio of 1:1:1, the amount of Fe and manganese ions dissolved (ppm), button cell gram capacity at 0.1C (mAh/g), average discharge voltage of button cell (V), number of cycles at 80% capacity retention rate at 45°C, and cell swelling rate after storage at 60°C (%) of the button batteries or full batteries in Comparative examples 1-1 to 1-33, 2-1 to 2-4, 3-1 to 3-12, and 4-1 to 4-4 formed were tested according to the foregoing method, and the test results were

recorded in Table 7.

**Table 7**

| Comparative example No. | Amount of Fe and manganese ions dissolved after cycling (ppm) | Button cell gram capacity at 0.1C (mAh/g) | Average discharge voltage of button cell (V) | Cell swelling rate after 30 days of storage at 60°C (%) | Number of cycles corresponding to 80% capacity retention rate at 45°C |
|---|---|---|---|---|---|
| 1-1 | 8 | 158.2 | 3.78 | 1.9 | 1328 |
| 1-2 | 63 | 148.9 | 3.75 | 6.4 | 804 |
| 1-3 | 48 | 148.5 | 3.74 | 5.3 | 918 |
| 1-4 | 32 | 147.3 | 3.73 | 4.8 | 968 |
| 1-5 | 20 | 146.8 | 3.73 | 3.6 | 1064 |
| 1-6 | 15 | 145.9 | 3.72 | 2.8 | 1189 |
| 1-7 | 42 | 147.5 | 3.73 | 4.8 | 968 |
| 1-8 | 38 | 146.4 | 3.73 | 4.3 | 1012 |
| 1-9 | 29 | 144.3 | 3.73 | 3.7 | 1108 |
| 1-10 | 18 | 142.1 | 3.73 | 2.8 | 1219 |
| 1-11 | 34 | 147.8 | 3.74 | 5.2 | 927 |
| 1-12 | 22 | 147.6 | 3.74 | 6.1 | 897 |
| 1-13 | 18 | 147.2 | 3.74 | 6.9 | 816 |
| 1-14 | 9 | 147.0 | 3.75 | 7.5 | 764 |
| 1-15 | 18 | 138.7 | 3.86 | 8.4 | 857 |
| 1-16 | 14 | 139.4 | 3.86 | 4.5 | 974 |
| 1-17 | 13 | 153.2 | 3.78 | 3.2 | 1241 |
| 1-18 | 10 | 155.6 | 3.80 | 2.7 | 1245 |
| 1-19 | 9 | 157.6 | 3.80 | 2.1 | 1349 |
| 1-20 | 11 | 157.4 | 3.80 | 2.4 | 1368 |
| 1-21 | 8 | 158.4 | 3.72 | 2.0 | 1459 |
| 1-22 | 12 | 156.9 | 3.83 | 2.8 | 1283 |
| 1-23 | 11 | 157.1 | 3.83 | 2.5 | 1268 |
| 1-24 | 10 | 157.4 | 3.83 | 2.6 | 1329 |
| 1-25 | 10 | 157.3 | 3.78 | 2.4 | 1369 |
| 1-26 | 12 | 156.1 | 3.85 | 2.9 | 1128 |
| 1-27 | 11 | 157.5 | 3.78 | 2.4 | 1394 |
| 1-28 | 13 | 156.8 | 3.89 | 3.2 | 1089 |
| 1-29 | 14 | 156.1 | 3.89 | 3.2 | 1038 |
| 1-30 | 16 | 155.8 | 3.89 | 3.1 | 948 |
| 1-31 | 17 | 155.4 | 3.89 | 3.0 | 917 |
| 1-32 | 18 | 154.8 | 3.89 | 2.8 | 897 |
| 1-33 | 20 | 154.5 | 3.89 | 2.7 | 879 |
| 2-1 | 147 | 145.2 | 3.72 | 5.6 | 698 |
| 2-2 | 97 | 149.2 | 3.74 | 4.7 | 869 |

(continued)

| Comparative example No. | Amount of Fe and manganese ions dissolved after cycling (ppm) | Button cell gram capacity at 0.1C (mAh/g) | Average discharge voltage of button cell (V) | Cell swelling rate after 30 days of storage at 60°C (%) | Number of cycles corresponding to 80% capacity retention rate at 45°C |
|---|---|---|---|---|---|
| 2-3 | 29 | 151.3 | 3.75 | 3.8 | 1027 |
| 2-4 | 8 | 158.2 | 3.79 | 1.9 | 1328 |
| 3-1 | 49 | 155.2 | 3.67 | 5.6 | 1102 |
| 3-2 | 37 | 155.7 | 3.69 | 4.7 | 1203 |
| 3-3 | 28 | 156.4 | 3.72 | 3.8 | 1275 |
| 3-4 | 17 | 157.8 | 3.75 | 3.1 | 1305 |
| 3-5 | 9 | 158.5 | 3.78 | 2.4 | 1327 |
| 3-6 | 19 | 156.7 | 3.73 | 3.6 | 1257 |
| 3-7 | 38 | 154.8 | 3.69 | 4.8 | 1179 |
| 3-8 | 46 | 153.7 | 3.64 | 6.3 | 986 |
| 3-9 | 38 | 155.4 | 3.76 | 4.9 | 1021 |
| 3-10 | 27 | 156.3 | 3.77 | 4.2 | 1097 |
| 3-11 | 15 | 157.8 | 3.79 | 3.1 | 1184 |
| 3-12 | 11 | 158.1 | 3.79 | 2.4 | 1297 |
| 4-1 | -- | 155.4 | 3.71 | 3.4 | 1183 |
| 4-2 | -- | 157.8 | 3.78 | 2.4 | 1347 |
| 4-3 | -- | 156.5 | 3.73 | 3.1 | 1277 |
| 4-4 | -- | 153.8 | 3.69 | 3.9 | 984 |
| 4-5 | -- | 155.5 | 3.71 | 3.5 | 895 |
| 4-6 | -- | 156.3 | 3.72 | 3.1 | 963 |
| 4-7 | -- | 156.9 | 3.74 | 2.7 | 1043 |

In addition, it can be seen from the comparisons of data between Table 7 and Tables 1 to 3 that the compositions of the electrolyte in this application can further improve the energy density and cycling performance of the secondary battery.

## Claims

**1.** A secondary battery (5), comprising a positive electrode plate and a non-aqueous electrolyte, wherein

the positive electrode plate comprises a positive electrode active material, the positive electrode active material comprising a core and a shell enveloping the core,
the core comprising $Li_{1+x}Mn_{1-y}A_yP_{1-z}R_zO_4$, wherein x is in the range of -0.100 to 0.100, y is in the range of 0.001 to 0.500, z is in the range of 0.001 to 0.100, A is one or more selected from a group consisting of Zn, Al, Na, K, Mg, Mo, W, Ti, V, Zr, Fe, Ni, Co, Ga, Sn, Sb, Nb, and Ge, optionally one or more selected from a group consisting of Fe, Ti, V, Ni, Co, and Mg, R is one or more selected from a group consisting of B, Si, N, and S; and
the shell comprising a first coating layer enveloping the core and a second coating layer covering the first coating layer; wherein
the first coating layer comprises a pyrophosphate $MP_2O_7$ and a phosphate $XPO_4$, wherein M and X are each independently one or more selected from a group consisting of Li, Fe, Ni, Mg, Co, Cu, Zn, Ti, Ag, Zr, Nb, and Al, and the second coating layer comprises carbon; and
the non-aqueous electrolyte comprises a first additive, the first additive comprising one or more from a group

consisting of compounds shown in formula 1 and compounds shown in formula 2,

formula 1

formula 2

wherein $R_1$ and $R_2$ each independently represent any one of a hydrogen atom, a halogen atom, a C1-C6 alkyl group, a C1-C6 haloalkyl group, a C1-C6 alkoxy group, a C2-C6 alkenyl group, or a C2-C6 alkynyl group; and $R_3$, $R_4$, $R_5$, and $R_6$ each independently represent any one of a hydrogen atom, a halogen atom, a C1-C6 alkyl group, a C1-C6 haloalkyl group, a C1-C6 alkoxy group, a C2-C6 alkenyl group, a C2-C6 alkynyl group, or a C2-C6 alkynyloxy group; and $R_3$, $R_4$, $R_5$, and $R_6$ do not all represent a hydrogen atom,
the first additive is any one of the following compounds:

a weight ratio of the pyrophosphate to the phosphate in the first coating layer is in the range of 1:3 to 3:1, optionally 1:3 to 1:1, and
the crystallinity of the pyrophosphate and phosphate each independently ranges from 10% to 100%, measured by the method as mentioned in the description.

**2.** The secondary battery (5) according to claim 1, wherein

$R_1$ and $R_2$ each independently represent any one of a hydrogen atom, a halogen atom, a C1-C4 alkyl group, a C1-C4 haloalkyl group, a C1-C4 alkoxy group, a C2-C4 alkenyl group, or a C2-C4 alkynyl group, and optionally, $R_1$ and $R_2$ each independently represent any one of a hydrogen atom, a halogen atom, a C1-C4 alkyl group, a C1-C2 haloalkyl group, or a C2-C3 alkenyl group; and/or,
$R_3$, $R_4$, $R_5$, and $R_6$ each independently represent any one of a hydrogen atom, a halogen atom, a C1-C4 alkyl group, a C1-C4 haloalkyl group, a C1-C4 alkoxy group, a C2-C4 alkenyl group, a C2-C4 alkynyl group, or a C2-C4 alkynyloxy group, optionally, $R_3$, $R_4$, $R_5$, and $R_6$ each independently represent any one of a hydrogen atom, a halogen atom, a C1-C3 alkyl group, a C1-C2 haloalkyl group, a C1-C4 alkoxy group, a C2-C4 alkenyl group, or a C2-C4 alkynyloxy group, and $R_3$, $R_4$, $R_5$, and $R_6$ do not all represent a hydrogen atom.

**3.** The secondary battery (5) according to claim 1 or 2, wherein, based on a total weight of the non-aqueous electrolyte, a percentage of the first additive is W1% by weight, W1 being 0.01 to 20, optionally 0.1 to 10 or 0.3 to 7.

**4.** The secondary battery (5) according to any one of claims 1 to 3, wherein the non-aqueous electrolyte further comprises a second additive, the second additive comprising one or more of cyclic sulfates, and optionally, the cyclic sulfates comprise at least one of the compounds shown in formula 3,

formula 3,

wherein q represents **1, 2,** or 3; $R_{14}$ represents one of a hydrogen atom, a halogen atom, a carbonyl group, a C1-C6 alkyl group, a C1-C3 haloalkyl group, a C1-C3 alkoxy group, a C1-C3 haloalkoxy group, and a cyclic sulfate group, and optionally $R_{14}$ represents one of a hydrogen atom, a halogen atom, a C1-C4 alkyl group, and a cyclic sulfate group; $R_{15}$ each independently represents one of a hydrogen atom, a halogen atom, a C1-C6 alkyl group, a C1-C3 haloalkyl group, a C1-C3 alkoxy group, a C1-C3 haloalkoxy group, a C1-C6 aryl group, and a cyclic sulfate group, and optionally, $R_{15}$ each independently represents one of a hydrogen atom, a halogen atom, a C1-C4 alkyl group, and a cyclic sulfate group; and optionally, $R_{11}$ and $R_{12}$ are connected and form a C3-C6 cycloalkyl group with C connected therewith; and

optionally, the cyclic sulfates comprise at least one of the following compounds:

;

further optionally, the second additive comprises at least one of the following compounds:

.

**5.** The secondary battery (5) according to claim 4, wherein, based on the total weight of the non-aqueous electrolyte, a percentage of the second additive is W2% by weight, W2 being 0.01 to 20, optionally 0.1 to 10 or 0.3 to 7, and/or, based on the total weight of the non-aqueous electrolyte, the percentage of the first additive is W1% by weight, W1 being 0.01 to 20, optionally 0.1 to 10 or 0.7 to 7, and A is the mass ratio of W2/W1, A being 0.1 to 10, optionally 0.2 to 5.

**6.** The secondary battery (5) according to any one of claims 1 to 5, wherein the non-aqueous electrolyte further comprises a third additive, the third additive comprising one or more selected from a group consisting of a chain sulfate compound, a sulfite compound, a sultone compound containing an unsaturated bond, a disulfonic acid compound, a nitrile compound, an aromatic compound, an isocyanate compound, a phosphazene compound, a cyclic anhydride compound, a phosphite compound, a phosphate compound, and a borate compound, and/or wherein the non-aqueous electrolyte further comprises an organic solvent and an electrolytic salt,

optionally, the organic solvent comprises one or more selected from a group consisting of dimethyl carbonate, diethyl carbonate, dipropyl carbonate, ethyl methyl carbonate, methyl propyl carbonate, ethylene propyl carbonate, ethylene carbonate, propylene carbonate, butylene carbonate, gamma-butyrolactone, methyl formate, ethyl formate, methyl acetate, ethyl acetate, propyl acetate, methyl propionate, ethyl propionate, butyl propionate, and tetrahydrofuran; and/or

optionally, the electrolytic salt comprises one or more from a group consisting of $LiN(C_xF_{2x+1}SO_2)(C_yF_{2y+1}SO_2)$, $Li(FSO_2)_2N$, $LiCF_3SO_3$, $LiPF_6$, $LiBF_4$, $LiAsF_6$, $LiClO_4$, LiBOB, LiDFOB, and LiTFOP, x and y represent positive integers, optionally, x and y are each independently 0, 1, 2, or 3, and a concentration of the electrolytic salt in the non-aqueous electrolyte is in the range of 0.5 M-2 M, optionally 0.8 M-1.5 M.

**7.** The secondary battery (5) according to any one of claims 1 to 6, wherein

a) based on a weight of the core, a coating amount of the first coating layer is C1% by weight, C1 being greater than 0 and less than or equal to 7, optionally 4-5.6; and/or

based on the weight of the core, a coating amount of the second coating layer is C2% by weight, C2 being greater than 0 and less than or equal to 6, optionally 3-5;
or wherein

b) based on a weight of the core, a coating amount of the first coating layer is C1% by weight, C1 being greater than 0 and less than or equal to 7, optionally 4-5.6; and/or

based on the weight of the core, a coating amount of the second coating layer is C2% by weight, C2 being greater than 0 and less than or equal to 6, optionally 3-5;
wherein C is defined as a relationship W1/(C1+C2) between the percentage W1 of the first additive, the coating amount C1 of the first coating layer, and the coating amount C2 of the second coating layer, C being in the range of 0.001 to 2, optionally 0.01 to 1.

**8.** The secondary battery (5) according to any one of claims 1 to 7, wherein

a ratio of y to 1-y in the core is in the range of 1:10 to 10:1, optionally 1:4 to 1:1; and/or
a ratio of z to 1-z in the core is in the range of 1:9 to 1:999, optionally 1:499 to 1:249, and/or wherein
the crystallinity of the pyrophosphate and phosphate each independently ranges from 50% to 100%.

**9.** The secondary battery (5) according to any one of claims 1 to 8, wherein
A is at least two selected from Fe, Ti, V, Ni, Co, and Mg.

**10.** The secondary battery (5) according to any one of claims 1 to 9, wherein

a Li/Mn antisite defect concentration of the positive electrode active material is lower than 4%, optionally lower than 2%, and/or
wherein a lattice change rate of the positive electrode active material is lower than 6%, optionally lower than 4%, and/or
wherein a valence state of surface oxygen of the positive electrode active material is lower than -1.88 and optionally is in the range of -1.98 to -1.88, and/or wherein
a compacted density of the positive electrode active material under 3 tons is greater than 2.0 $g/cm^3$, optionally greater than 2.2 $g/cm^3$, wherein the antisite defect concentration, the lattice change rate, the valence state and/or the compacted density of the positive electrode material is measured as mentioned in the description.

**11.** A battery module (4), comprising the secondary battery (5) according to any one of claims 1 to 10.

**12.** A battery pack (1), comprising the battery module (4) according to claim 11.

**13.** An electric apparatus, comprising at least one of the secondary battery (5) according to any one of claims 1 to 10, the battery module (4) according to claim 11, or the battery pack (1) according to claim 12.

## Patentansprüche

1. Sekundärbatterie (5), umfassend eine positive Elektrodenplatte und einen nichtwässrigen Elektrolyten, wobei

die positive Elektrodenplatte ein aktives Material der positiven Elektrode umfasst, wobei das aktive Material der positiven Elektrode einen Kern und eine den Kern umhüllende Hülle umfasst,
der Kern $Li_{1+x}Mn_{1-y}A_yP_{1-z}R_zO_4$ umfasst, wobei x im Bereich von -0,100 bis 0,100 liegt, y im Bereich von 0,001 bis 0,500 liegt, z im Bereich von 0,001 bis 0,100 liegt, A ein oder mehrere Elemente ist, ausgewählt aus einer Gruppe bestehend aus Zn, Al, Na, K, Mg, Mo, W, Ti, V, Zr, Fe, Ni, Co, Ga, Sn, Sb, Nb und Ge, gegebenenfalls ein oder mehrere Elemente, ausgewählt aus einer Gruppe bestehend aus Fe, Ti, V, Ni, Co und Mg, R ein oder mehrere Elemente ist, ausgewählt aus einer Gruppe bestehend aus B, Si, N und S; und
wobei die Hülle eine den Kern umhüllende erste Beschichtungsschicht und eine die erste Beschichtungsschicht bedeckende zweite Beschichtungsschicht umfasst; wobei
die erste Beschichtungsschicht ein Pyrophosphat $MP_2O_7$ und ein Phosphat $XPO_4$ umfasst, wobei M und X jeweils unabhängig voneinander eines oder mehrere Elemente aus einer Gruppe bestehend aus Li, Fe, Ni, Mg, Co, Cu, Zn, Ti, Ag, Zr, Nb und Al sind, und
die zweite Beschichtungsschicht Kohlenstoff umfasst; und
der nichtwässrige Elektrolyt ein erstes Additiv umfasst, das eine oder mehrere Verbindungen aus einer Gruppe umfasst, die aus den in Formel 1 und den in Formel 2 gezeigten Verbindungen besteht,

Formel 1

Formel 2

wobei $R_1$ und $R_2$ jeweils unabhängig voneinander ein Wasserstoffatom, ein Halogenatom, eine C1-C6-Alkylgruppe, eine C1-C6-Halogenalkylgruppe, eine C1-C6-Alkoxygruppe, eine C2-C6-Alkenylgruppe oder eine C2-C6-Alkinylgruppe darstellen; und
$R_3$, $R_4$, $R_5$ und $R_6$ jeweils unabhängig voneinander ein Wasserstoffatom, ein Halogenatom, eine C1-C6-Alkylgruppe, eine C1-C6-Halogenalkylgruppe, eine C1-C6-Alkoxygruppe, eine C2-C6-Alkenylgruppe, eine C2-C6-Alkinylgruppe oder eine C2-C6-Alkinyloxygruppe darstellen; und $R_3$, $R_4$, $R_5$ und $R_6$ nicht alle ein Wasserstoffatom darstellen,
das erste Additiv eine der folgenden Verbindungen ist:

,

das Gewichtsverhältnis von Pyrophosphat zu Phosphat in der ersten Beschichtungsschicht im Bereich von 1:3 bis 3:1, gegebenenfalls von 1:3 bis 1:1, liegt und
die Kristallinität des Pyrophosphats und des Phosphats jeweils unabhängig voneinander im Bereich von 10 % bis 100 % liegt, gemessen nach dem in der Beschreibung genannten Verfahren.

2. Sekundärbatterie (5) nach Anspruch 1, wobei

$R_1$ und $R_2$ jeweils unabhängig voneinander eines der folgenden darstellen: ein Wasserstoffatom, ein Halogenatom, eine C1-C4-Alkylgruppe, eine C1-C4-Halogenalkylgruppe, eine C1-C4-Alkoxygruppe, eine C2-C4-Alkenylgruppe oder eine C2-C4-Alkinylgruppe, und gegebenenfalls $R_1$ und $R_2$ jeweils unabhängig voneinander ein Wasserstoffatom, ein Halogenatom, eine C1-C4-Alkylgruppe, eine C1-C2-Halogenalkylgruppe oder eine C2-C3-Alkenylgruppe darstellen; und/oder

$R_3$, $R_4$, $R_5$ und $R_6$ jeweils unabhängig voneinander ein Wasserstoffatom, ein Halogenatom, eine C1-C4-Alkylgruppe, eine C1-C4-Halogenalkylgruppe, eine C1-C4-Alkoxygruppe, eine C2-C4-Alkenylgruppe, eine C2-C4-Alkinylgruppe oder eine C2-C4-Alkinyloxygruppe darstellen, wobei gegebenenfalls $R_3$, $R_4$, $R_5$ und $R_6$ jeweils unabhängig voneinander ein Wasserstoffatom, ein Halogenatom, eine C1-C3-Alkylgruppe, eine C1-C2-Halogenalkylgruppe, eine C1-C4-Alkoxygruppe, eine C2-C4-Alkenylgruppe oder eine C2-C4-Alkinyloxygruppe darstellen, und $R_3$, $R_4$, $R_5$ und $R_6$ nicht alle ein Wasserstoffatom darstellen.

**3.** Sekundärbatterie (5) gemäß Anspruch 1 oder 2, wobei, bezogen auf das Gesamtgewicht des nichtwässrigen Elektrolyten, der prozentuale Anteil des ersten Additivs W1 Gew.-% beträgt, wobei W1 0,01 bis 20, gegebenenfalls 0,1 bis 10 oder 0,3 bis 7 beträgt.

**4.** Sekundärbatterie (5) nach einem der Ansprüche 1 bis 3, wobei der nichtwässrige Elektrolyt ferner ein zweites Additiv umfasst, wobei das zweite Additiv ein oder mehrere cyclische Sulfate umfasst und wobei die cyclischen Sulfate gegebenenfalls mindestens eine der in Formel 3 gezeigten Verbindungen umfassen,

O O S O O q $R_{14}$ $R_{15}$ Formel 3,

wobei q für 1, 2 oder 3 steht; $R_{14}$ ein Wasserstoffatom, ein Halogenatom, eine Carbonylgruppe, eine C1-C6-Alkylgruppe, eine C1-C3-Halogenalkylgruppe, eine C1-C3-Alkoxygruppe, eine C1-C3-Halogenalkoxygruppe oder eine cyclische Sulfatgruppe darstellt und gegebenenfalls $R_{14}$ ein Wasserstoffatom, ein Halogenatom, eine C1-C4-Alkylgruppe oder eine cyclische Sulfatgruppe darstellt; $R_{15}$ jeweils unabhängig voneinander ein Wasserstoffatom, ein Halogenatom, eine C1-C6-Alkylgruppe, eine C1-C3-Halogenalkylgruppe, eine C1-C3-Alkoxygruppe, eine C1-C3-Halogenalkoxygruppe, eine C1-C6-Arylgruppe oder eine cyclische Sulfatgruppe darstellt, und gegebenenfalls $R_{15}$ jeweils unabhängig voneinander ein Wasserstoffatom, ein Halogenatom, eine C1-C4-Alkylgruppe oder eine cyclische Sulfatgruppe darstellt; und gegebenenfalls $R_{11}$ und $R_{12}$ miteinander verbunden sind und eine C3-C6-Cycloalkylgruppe bilden, an die C gebunden ist; und

gegebenenfalls die cyclischen Sulfate mindestens eine der folgenden Verbindungen umfassen:

O S O O O    O S O O O    O S O O O F

O S O O O O O S O O    O S O O O O S O O O    O S O O O O O S O O ;

ferner optional das zweite Additiv mindestens eine der folgenden Verbindungen umfasst:

.

5. Sekundärbatterie (5) nach Anspruch 4, wobei, bezogen auf das Gesamtgewicht des nichtwässrigen Elektrolyten, der prozentuale Anteil des zweiten Additivs W2 Gew.-% beträgt, wobei W2 0,01 bis 20, gegebenenfalls 0,1 bis 10 oder 0,3 bis 7 beträgt, und/oder,
bezogen auf das Gesamtgewicht des nichtwässrigen Elektrolyten der prozentuale Anteil des ersten Additivs W1 Gew.-% beträgt, wobei W1 0,01 bis 20, gegebenenfalls 0,1 bis 10 oder 0,7 bis 7 beträgt, und A das Massenverhältnis von W2/W1 ist, wobei A 0,1 bis 10, gegebenenfalls 0,2 bis 5 beträgt.

6. Sekundärbatterie (5) nach einem der Ansprüche 1 bis 5, wobei der nichtwässrige Elektrolyt ferner ein drittes Additiv umfasst, wobei das dritte Additiv eine oder mehrere Verbindungen umfasst, die aus einer Gruppe ausgewählt sind, bestehend aus einer Kettensulfatverbindung, einer Sulfitverbindung, einer eine ungesättigte Bindung enthaltenden Sultonverbindung, einer Disulfonsäureverbindung, einer Nitrilverbindung, einer aromatischen Verbindung, einer Isocyanatverbindung, einer Phosphazenverbindung, einer cyclischen Anhydridverbindung, einer Phosphitverbindung, einer Phosphatverbindung und einer Boratverbindung, und/oder wobei der nichtwässrige Elektrolyt ferner ein organisches Lösungsmittel und ein Elektrolytsalz umfasst,

wobei das organische Lösungsmittel gegebenenfalls eine oder mehrere Verbindungen umfasst, ausgewählt aus einer Gruppe bestehend aus Dimethylcarbonat, Diethylcarbonat, Dipropylcarbonat, Ethylmethylcarbonat, Methylpropylcarbonat, Ethylenpropylcarbonat, Ethylencarbonat, Propylencarbonat, Butylencarbonat, Gamma-Butyrolacton, Methylformiat, Ethylformiat, Methylacetat, Ethylacetat, Propylacetat, Methylpropionat, Ethylpropionat, Butylpropionat und Tetrahydrofuran; und/oder
optional das Elektrolytsalz eine oder mehrere Verbindungen umfasst, ausgewählt aus der Gruppe bestehend aus $LiN(C_xF_{2x+1}SO_2)(C_yF_{2y+1}SO_2)$, $Li(FSO_2)_2N$, $LiCF_3SO_3$, $LiPF_6$, $LiBF_4$, $LiAsF_6$, $LiClO_4$, LiBOB, LiDFOB und LiTFOP, wobei x und y positive ganze Zahlen darstellen, wobei x und y gegebenenfalls jeweils unabhängig voneinander 0, 1, 2 oder 3 sind, und die Konzentration des Elektrolytsalzes im nichtwässrigen Elektrolyten im Bereich von 0,5 M bis 2 M liegt, optional 0,8 M-1,5 M.

7. Sekundärbatterie (5) nach einem der Ansprüche 1 bis 6, wobei

a) bezogen auf das Gewicht des Kerns die Beschichtungsmenge der ersten Beschichtungsschicht C1 Gew.-% beträgt, wobei C1 größer als 0 und kleiner oder gleich 7 ist, gegebenenfalls 4-5,6; und/oder

bezogen auf das Gewicht des Kerns die Beschichtungsmenge der zweiten Beschichtungsschicht C2 Gew.-% beträgt, wobei C2 größer als 0 und kleiner oder gleich 6 ist, optional 3-5;
oder wobei

b) bezogen auf das Gewicht des Kerns die Beschichtungsmenge der ersten Beschichtungsschicht C1 Gew.-% beträgt, wobei C1 größer als 0 und kleiner oder gleich 7 ist, gegebenenfalls 4-5,6; und/oder

bezogen auf das Gewicht des Kerns, die Beschichtungsmenge der zweiten Beschichtungsschicht C2 Gew.-% beträgt, wobei C2 größer als 0 und kleiner oder gleich 6 ist, optional 3-5;
wobei C als das Verhältnis W1/(C1+C2) zwischen dem prozentualen Anteil W1 des ersten Additivs, der Beschichtungsmenge C1 der ersten Beschichtungsschicht und der Beschichtungsmenge C2 der zweiten Beschichtungsschicht definiert ist, wobei C im Bereich von 0,001 bis 2, gegebenenfalls von 0,01 bis 1, liegt.

8. Sekundärbatterie (5) nach einem der Ansprüche 1 bis 7, wobei

ein Verhältnis von y zu 1-y im Kern im Bereich von 1:10 bis 10:1, gegebenenfalls von 1:4 bis 1:1, liegt; und/oder das Verhältnis von z zu 1-z im Kern im Bereich von 1:9 bis 1:999 liegt, gegebenenfalls von 1:499 bis 1:249,

und/oder wobei
die Kristallinität des Pyrophosphats und des Phosphats jeweils unabhängig voneinander im Bereich von 50 % bis 100 % liegt.

**9.** Sekundärbatterie (5) nach einem der Ansprüche 1 bis 8, wobei
A mindestens zwei Elemente ist, die aus Fe, Ti, V, Ni, Co und Mg ausgewählt sind.

**10.** Sekundärbatterie (5) gemäß einem der Ansprüche 1 bis 9, wobei

die Li/Mn-Antisite-Defektkonzentration des aktiven Materials der positiven Elektrode geringer als 4 %, gegebenenfalls geringer als 2 % ist und/oder
wobei die Gitteränderungsrate des aktiven Materials der positiven Elektrode geringer als 6 % ist, gegebenenfalls geringer als 4 %, und/oder
wobei ein Valenzzustand des Oberflächensauerstoffs des aktiven Materials der positiven Elektrode kleiner als -1,88 ist und gegebenenfalls im Bereich von -1,98 bis -1,88 liegt, und/oder wobei
die Verdichtungsdichte des aktiven Materials der positiven Elektrode unter 3 Tonnen größer als 2,0 $g/cm^3$ ist, gegebenenfalls größer als 2,2 $g/cm^3$, wobei die Konzentration an Antisite-Defekten, die Gitteränderungsrate, der Valenzzustand und/oder die Verdichtungsdichte des Elektrodenmaterials wie in der Beschreibung angegeben gemessen werden.

**11.** Batteriemodul (4), das die Sekundärbatterie (5) nach einem der Ansprüche 1 bis 10 umfasst.

**12.** Batteriepack (1), umfassend das Batteriemodul (4) nach Anspruch 11.

**13.** Elektrisches Gerät, das mindestens eines der folgenden Elemente umfasst: die Sekundärbatterie (5) nach einem der Ansprüche 1 bis 10, das Batteriemodul (4) nach Anspruch 11 oder das Batteriepack (1) nach Anspruch 12.

## Revendications

**1.** Batterie secondaire (5), comprenant une plaque d'électrode positive et un électrolyte non aqueux, dans laquelle

la plaque d'électrode positive comprend un matériau actif d'électrode positive, ledit matériau actif d'électrode positive comprenant un noyau et une enveloppe entourant ledit noyau,
le noyau comprenant $Li_{1+x}Mn_{1-y}A_yP_{1-z}R_zO_4$, où x est compris entre -0,100 et 0,100, y est compris entre 0,001 et 0,500, z est compris entre 0,001 et 0,100, A représente un ou plusieurs éléments choisis dans le groupe constitué de Zn, Al, Na, K, Mg, Mo, W, Ti, V, Zr, Fe, Ni, Co, Ga, Sn, Sb, Nb et Ge, éventuellement un ou plusieurs éléments choisis dans le groupe constitué de Fe, Ti, V, Ni, Co et Mg, R est un ou plusieurs éléments choisis dans le groupe constitué de B, Si, N et S ; et
l'enveloppe comprenant une première couche de revêtement enveloppant le noyau et une deuxième couche de revêtement recouvrant la première couche de revêtement ; dans laquelle
la première couche de revêtement comprend un pyrophosphate $MP_2O_7$ et un phosphate $XPO_4$, où M et X représentent chacun, indépendamment, un ou plusieurs éléments choisis dans le groupe constitué de Li, Fe, Ni, Mg, Co, Cu, Zn, Ti, Ag, Zr, Nb et Al, et
la deuxième couche de revêtement comprend du carbone ; et
l'électrolyte non aqueux comprend un premier additif, ledit premier additif comprenant un ou plusieurs éléments choisis dans le groupe constitué de composés représentés par la formule 1 et de composés représentés par la formule 2,

formule 1

formule 2

où $R_1$ et $R_2$ représentent chacun indépendamment un atome d'hydrogène, un atome d'halogène, un groupe alkyle en C1 à C6, un groupe halogénoalkyle en C1 à C6, un groupe alcoxy en C1 à C6, un groupe alcényle en C2 à C6 ou un groupe alcynyle en C2 à C6 ; et

$R_3$, $R_4$, $R_5$ et $R_6$ représentent chacun indépendamment un atome d'hydrogène, un atome d'halogène, un groupe alkyle en C1 à C6, un groupe halogénoalkyle en C1 à C6, un groupe alcoxy en C1 à C6, un groupe alcényle en C2 à C6, un groupe alcynyle en C2 à C6 ou un groupe alcynyloxy en C2 à C6 ; et $R_3$, $R_4$, $R_5$ et $R_6$ ne représentent pas tous un atome d'hydrogène,

le premier additif est l'un quelconque des composés suivants :

,

le rapport pondéral entre le pyrophosphate et le phosphate dans la première couche de revêtement est compris entre 1:3 et 3:1, éventuellement entre 1:3 et 1:1, et

la cristallinité du pyrophosphate et du phosphate varie, indépendamment l'une de l'autre, de 10 % à 100 %, mesurée selon la méthode indiquée dans la description.

**2.** Batterie secondaire (5) selon la revendication 1, dans laquelle

$R_1$ et $R_2$ représentent chacun indépendamment l'un quelconque parmi un atome d'hydrogène, un atome d'halogène, un groupe alkyle en C1-C4, un groupe halogénoalkyle en C1-C4, un groupe alcoxy en C1-C4, un groupe alcényle en C2-C4 ou un groupe alcynyle en C2-C4, et éventuellement, $R_1$ et $R_2$ représentent chacun indépendamment un atome d'hydrogène, un atome d'halogène, un groupe alkyle en C1 à C4, un groupe halogénoalkyle en C1 à C2 ou un groupe alcényle en C2 à C3 ; et/ou,

$R_3$, $R_4$, $R_5$ et $R_6$ représentent chacun indépendamment un atome d'hydrogène, un atome d'halogène, un groupe alkyle en C1 à C4, un groupe halogénoalkyle en C1 à C4, un groupe alcoxy en C1 à C4, un groupe alcényle en C2 à C4, un groupe alcynyle en C2 à C4 ou un groupe alcynyloxy en C2 à C4 ; éventuellement, $R_3$, $R_4$, $R_5$ et $R_6$ représentent chacun indépendamment un atome d'hydrogène, un atome d'halogène, un groupe alkyle en C1 à C3, un groupe halogénoalkyle en C1 à C2, un groupe alcoxy en C1 à C4, un groupe alcényle en C2 à C4 ou un groupe alcynyloxy en C2 à C4, et $R_3$, $R_4$, $R_5$ et $R_6$ ne représentent pas tous un atome d'hydrogène.

**3.** Batterie secondaire (5) selon la revendication 1 ou 2, dans laquelle, par rapport au poids total de l'électrolyte non aqueux, le pourcentage en poids du premier additif est de W1 %, W1 étant compris entre 0,01 et 20, éventuellement entre 0,1 et 10 ou entre 0,3 et 7.

**4.** Batterie secondaire (5) selon l'une quelconque des revendications 1 à 3, dans laquelle l'électrolyte non aqueux comprend en outre un deuxième additif, le deuxième additif comprenant un ou plusieurs sulfates cycliques et, le cas échéant, les sulfates cycliques comprennent au moins l'un des composés représentés par la formule 3,

formule 3,

où q représente 1, 2 ou 3 ; $R_{14}$ représente un atome d'hydrogène, un atome d'halogène, un groupe carbonyle, un groupe alkyle en C1 à C6, un groupe halogénoalkyle en C1 à C3, un groupe alcoxy en C1 à C3, un groupe halogénoalcoxy en C1 à C3 ou un groupe sulfate cyclique, et éventuellement $R_{14}$ représente un atome d'hydrogène, un atome d'halogène, un groupe alkyle en C1 à C4 ou un groupe sulfate cyclique ; $R_{15}$ représente chacun indépendamment un atome d'hydrogène, un atome d'halogène, un groupe alkyle en C1 à C6, un groupe halogénoalkyle en C1 à C3, un groupe alcoxy en C1 à C3, un groupe halogénoalcoxy en C1 à C3, un groupe aryle en C1 à C6 et un groupe sulfate cyclique, et

éventuellement, $R_{15}$ représentent chacun indépendamment un atome d'hydrogène, un atome d'halogène, un groupe alkyle en C1 à C4 ou un groupe sulfate cyclique ; et éventuellement, $R_{11}$ et $R_{12}$ sont liés et forment un groupe cycloalkyle en C3 à C6 auquel C est lié ; et

éventuellement, les sulfates cycliques comprennent au moins l'un des composés suivants :

en outre, éventuellement, le deuxième additif comprend au moins l'un des composés suivants :

5. Batterie secondaire (5) selon la revendication 4, dans laquelle, par rapport au poids total de l'électrolyte non aqueux, le pourcentage du deuxième additif est de W2 % en poids, W2 étant compris entre 0,01 et 20, éventuellement entre 0,1 et 10 ou entre 0,3 et 7, et/ou,
par rapport au poids total de l'électrolyte non aqueux, le pourcentage du premier additif est de W1 % en poids, W1 étant compris entre 0,01 et 20, éventuellement entre 0,1 et 10 ou entre 0,7 et 7, et A est le rapport massique W2/W1, A étant compris entre 0,1 et 10, éventuellement entre 0,2 et 5.

6. Batterie secondaire (5) selon l'une quelconque des revendications 1 à 5, dans laquelle l'électrolyte non aqueux comprend en outre un troisième additif, le troisième additif comprenant un ou plusieurs composés choisis dans le groupe constitué de composés sulfate à chaîne, de composés sulfite, de composés sultone contenant une liaison insaturée, de composés d'acide disulfonique, de composés nitrile, de composés aromatiques, de composés isocyanate, un composé de phosphazène, un composé d'anhydride cyclique, un composé de phosphite, un composé de phosphate et un composé de borate, et/ou dans laquelle l'électrolyte non aqueux comprend en outre un solvant organique et un sel électrolytique,

éventuellement, le solvant organique comprend un ou plusieurs composés choisis dans le groupe constitué de carbonate de diméthyle, de carbonate de diéthyle, de carbonate de dipropyle, de carbonate d'éthyle et de

méthyle, de carbonate de méthyle et de propyle, de carbonate d'éthylène et de propyle, de carbonate d'éthylène, de carbonate de propylène, de carbonate de butylène, de gamma-butyrolactone, de formiate de méthyle, de formiate d'éthyle, d'acétate de méthyle, d'acétate d'éthyle, d'acétate de propyle, de propionate de méthyle, de propionate d'éthyle, de propionate de butyle et de tétrahydrofurane ; et/ou
éventuellement, le sel électrolytique comprend un ou plusieurs composés choisis dans le groupe constitué de $LiN(C_xF_{2x+1}SO_2)(C_yF_{2y+1}SO_2)$, $Li(FSO_2)_2N$, $LiCF_3SO_3$, $LiPF_6$, $LiBF_4$, $LiAsF_6$, $LiClO_4$, LiBOB, LiDFOB et LiTFOP, x et y représentent des entiers positifs ; éventuellement, x et y valent chacun indépendamment 0, 1, 2 ou 3 ; et la concentration du sel électrolytique dans l'électrolyte non aqueux est comprise entre 0,5 M et 2 M, éventuellement comprise entre 0,8 M et 1,5 M.

**7.** Batterie secondaire (5) selon l'une quelconque des revendications 1 à 6, dans laquelle

a) par rapport au poids du noyau, la quantité de revêtement de la première couche de revêtement est de C1 % en poids, C1 étant supérieur à 0 et inférieur ou égal à 7, éventuellement compris entre 4 et 5,6 ; et/ou

par rapport au poids du noyau, la quantité de revêtement de la deuxième couche de revêtement est de C2 % en poids, C2 étant supérieur à 0 et inférieur ou égal à 6, éventuellement compris entre 3 et 5 ;
ou dans laquelle

b) par rapport au poids du noyau, la quantité de revêtement de la première couche de revêtement est de C1 % en poids, C1 étant supérieur à 0 et inférieur ou égal à 7, éventuellement compris entre 4 et 5,6 ; et/ou

par rapport au poids du noyau, la quantité de revêtement de la deuxième couche de revêtement est de C2 % en poids, C2 étant supérieur à 0 et inférieur ou égal à 6, éventuellement compris entre 3 et 5 ;
dans laquelle C est défini comme le rapport W1/(C1+C2) entre le pourcentage W1 du premier additif, la quantité de revêtement C1 de la première couche de revêtement et la quantité de revêtement C2 de la deuxième couche de revêtement, C étant compris entre 0,001 et 2, éventuellement entre 0,01 et 1.

**8.** Batterie secondaire (5) selon l'une quelconque des revendications 1 à 7, dans laquelle

le rapport entre y et 1-y dans le noyau est compris entre 1:10 et 10:1, éventuellement entre 1:4 et 1:1 ; et/ou
le rapport entre z et 1-z dans le noyau est compris entre 1:9 et 1:999, éventuellement entre 1:499 et 1:249, et/ou dans laquelle
la cristallinité du pyrophosphate et du phosphate varie, indépendamment l'une de l'autre, de 50 % à 100 %.

**9.** Batterie secondaire (5) selon l'une quelconque des revendications 1 à 8, dans laquelle
A représente au moins deux éléments choisis parmi Fe, Ti, V, Ni, Co et Mg.

**10.** Batterie secondaire (5) selon l'une quelconque des revendications 1 à 9, dans laquelle

la concentration en défauts d'antisite Li/Mn du matériau actif de l'électrode positive est inférieure à 4 %, éventuellement inférieure à 2 %, et/ou
dans laquelle le taux de modification du réseau cristallin du matériau actif de l'électrode positive est inférieur à 6 %, éventuellement inférieur à 4 %, et/ou
dans laquelle l'état de valence de l'oxygène de surface du matériau actif de l'électrode positive est inférieur à -1,88 et, le cas échéant, se situe dans la plage de -1,98 à -1,88, et/ou dans laquelle
la densité compactée du matériau actif de l'électrode positive sous une charge de 3 tonnes est supérieure à 2,0 $g/cm^3$, éventuellement supérieure à 2,2 $g/cm^3$, la concentration en défauts antisite, le taux de modification du réseau cristallin, l'état de valence et/ou la densité compactée du matériau d'électrode étant mesurés comme indiqué dans la description.

**11.** Module de batterie (4), comprenant la batterie secondaire (5) selon l'une quelconque des revendications 1 à 10.

**12.** Bloc-batterie (1), comprenant le module de batterie (4) selon la revendication 11.

**13.** Appareil électrique, comprenant au moins l'un parmi la batterie secondaire (5) selon l'une quelconque des revendications 1 à 10, le module de batterie (4) selon la revendication 11 ou le bloc-batterie (1) selon la revendication 12.

Intensity （a. u. ）
LiMnPO4
20
30
40
50
60
70
2θ (Cu kα)

FIG. 1

5

FIG. 2

5
53
52
52
51

FIG. 3

4
5
5
5

FIG. 4

1

FIG. 5

1
2
4
4
4
4
4
4
3

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016190584 A1
- CN 103872320 A
- CN 109301174 A
- US 2019355983 A1
- WO 2018032569 A1
- GB 245332009 A